# EUROPEAN PATENT SPECIFICATION

(11) **EP 4 075 899 B1**
(45) Date of publication and mention of the grant of the patent: **08.04.2026**
(21) Application number: 21751072.6
(22) Date of filing: 02.02.2021
(51) Int. Cl.: H04L 5/00, H04B 7/08, H04W 72/04

(54) **QCL DETERMINING METHOD, TERMINAL, AND NETWORK SIDE DEVICE**
VERFAHREN ZUR BESTIMMUNG VON QCL, ENDGERÄT UND NETZSEITIGE VORRICHTUNG
PROCÉDÉ DE DÉTERMINATION DE QCL, TERMINAL ET DISPOSITIF CÔTÉ RÉSEAU

(30) Priority: 06.02.2020 CN 202010081756
(43) Date of publication of application: 19.10.2022
(73) Proprietor: Vivo Mobile Communication Co., Ltd., Dongguan, Guangdong 523863 (CN)
(72) Inventor: SONG, Yang, Dongguan, Guangdong 523863 (CN); SUN, Peng, Dongguan, Guangdong 523863 (CN)
(74) Representative: Brunazzi, Stefano
(86) International application number: PCT/CN2021/074866
(87) International publication number: WO 2021/155786

(56) References cited:
- EP-A1- 3 547 781
- CN-A- 109 587 793
- CN-A- 112 134 662
- US-A1- 2019 281 587
- US-A1- 2019 349 964
- NTT DOCOMO, INC: "Enhancements on multi-TRP/panel transmission", 3GPP DRAFT; R1-1911184, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 4 October 2019 (2019-10-04), Mobile Competence Centre ; 650, route des Lucioles ; F-06921 Sophia-Antipolis Cedex ; France, XP051789956
- HUAWEI, HISILICON: "Feature Summary of Enhancements on Multi-TRP/Panel Transmission", 3GPP DRAFT; R1-1913299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 25 November 2019 (2019-11-25), Mobile Competence Centre ; 650, route des Lucioles ; F-06921 Sophia-Antipolis Cedex ; France, XP051830596

## Description

### TECHNICAL FIELD

The embodiments of the present invention relate to the field of communications technologies, and in particular, to a QCL determining method, a terminal, and a network side device.

### BACKGROUND

At present, in a case that all TCI codepoints activated by a medium access control (Medium Access Control, MAC) control element (Control Element, CE) are mapped to one TCI state, if a time offset (a symbol interval between the last symbol of a PDCCH where the DCI that schedules the PDSCH transmission is located and the first symbol of the scheduled PDSCH transmission) of PDSCH transmission is less than a threshold indicated by timeDurationForQCL, UE may buffer received signals on these symbols by using default reception beams. That is, the UE may consider that a PDSCH of a serving cell and an RS in a QCL parameter are QCL, where the QCL parameter is used for indicate a QCL of a control resource set (Control Resource Set, CORESET) for PDCCH transmission. The CORESET is a CORESET that has a smallest CORESET index (Index) and is associated with a monitoring search space (Search Space) among one or more CORESETs on an active bandwidth part (BandWidth Part, BWP) of a serving cell monitored by the UE in the most recent slot. Therefore, a scheduled PDSCH is demodulated after successful detection of the DCI.

However, in a case that there is at least one TCI codepoint mapped with at least two TCI states in the TCI codepoints activated by the MAC CE, how to determine a QCL relationship of PDSCH transmission is not optimized for various situations at present, which leads to the poor performance of the PDSCH transmission.

EP3547781A1 discloses that the antenna ports of one DM-RS port group of the first PDSCH are quasi co-located with the RS(s) in the RS set.

US2019/281587A1 discloses that the DM-RS ports of PDSCH of a serving cell are quasi co-located with the RS(s) in the TCI-State.

### SUMMARY

The embodiments of the present invention provide a QCL determining method, a terminal, and a network side device, to resolve the problem of poor performance of the PDSCH transmission since how to determine a QCL relationship of PDSCH transmission is not optimized for various situations at present in a case that there is at least one TCI codepoint mapped with at least two TCI states in the TCI codepoints activated by the MAC CE.

According to a first aspect, an embodiment of the present invention provides a QCL determining method which is defined in claim 1.

According to a second aspect, an embodiment of the present invention provides a QCL determining method which is defined in claim 8.

According to a third aspect, an embodiment of the present invention further provides a terminal which is defined in claim 9.

According to a fourth aspect, an embodiment of the present invention further provides a network side device which is defined in claim 14.

According to a fifth aspect, an embodiment of the present invention further provides a computer-readable storage medium which is defined in claim 15.

Further advantageous embodiments of the present disclosure are indicated in the dependent claims.

### BRIEF DESCRIPTION OF THE DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram 1 of PDSCH transmission according to an embodiment of the present invention;
FIG. 2 is a schematic diagram 2 of PDSCH transmission according to an embodiment of the present invention;
FIG. 3 is a flowchart 1 of a QCL determining method according to an embodiment of the present invention;
FIG. 4 is a flowchart 2 of a QCL determining method according to an embodiment of the present invention;
FIG. 5 is a structural diagram 1 of a terminal according to an embodiment of the present invention;
FIG. 6 is a structural diagram 1 of a network side device according to an embodiment of the present invention;
FIG. 7 is a structural diagram 2 of a terminal according to an embodiment of the present invention; and
FIG. 8 is a structural diagram 2 of a network side device according to an embodiment of the present invention.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

The terms such as "first" and "second" in this application are used to distinguish similar objects, but are unnecessarily used to describe a specific sequence or order. Moreover, the terms "comprise", "include", and any other variants thereof mean to cover the non-exclusive inclusion. For example, a process, method, system, product, or device that includes a list of steps or units is not necessarily limited to those steps or units that are clearly listed, but may include other steps or units not expressly listed or inherent to such a process, method, product, or device. In addition, the use of "and/or" in this application means at least one of the connected objects, for example, 7 conditions such as A and/or B and/or C, indicating including A alone, B alone, C alone, and both A and B present, B and C present, A and C present, and A, B, and C all present.

For ease of understanding, some contents involved in the embodiments of the present invention are described below.

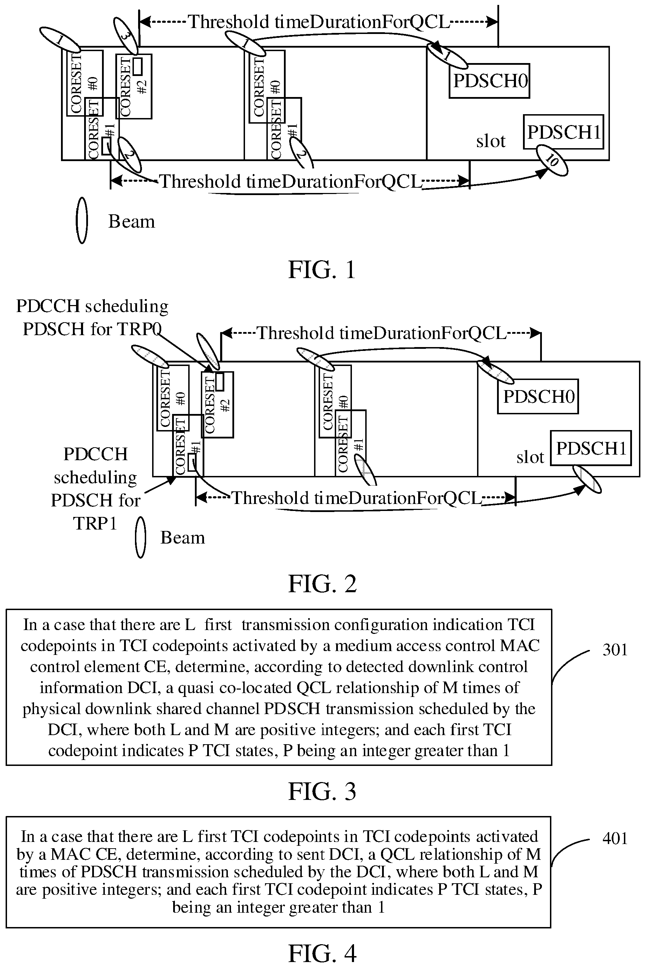

In Rel-15, when a high-layer parameter tci-PresentInDCI configured on a control resource set (Control Resource Set, CORESET) is set to be enabled (enabled), UE considers that a downlink control information (Downlink Control Information, DCI) format (Format) 1_1 or DCI format 1_2 (DCI Format 1_2) in a physical downlink control channel (Physical Downlink Control Channel, PDCCH) transmitted on the CORESET includes a transmission configuration indication (Transmission Configuration Indication, TCI) field. The TCI field is used for indicating a TCI state (TCI state), and the TCI state may include information about spatial reception beams. Only after detecting DCI, the UE can correctly interpret the TCI state from the DCI, and determine a reception beam used for receiving a physical downlink shared channel (Physical Downlink Shared Channel, PDSCH) scheduled by the PDCCH. However, it takes a certain time for the UE to detect the DCI and switch reception beams according to the indication of the TCI field. If the DCI format 1_1 indicates that a time offset (a symbol interval between the last symbol of the PDCCH where the DCI is located and the first symbol of the scheduled PDSCH transmission) of the scheduled PDSCH transmission is greater than or equal to a threshold timeDurationForQCL, the UE may receive a PDSCH, for example, a PDSCH1 in FIG. 1, of a serving cell according to a reception beam indicated by the TCI field in the DCI.

The UE receives the PDSCH of the serving cell according to the reception beam indicated by the TCI field in the DCI. That is, the UE may consider a quasi co-located (Quasi Co-Located, QCL) relationship of the PDSCH transmission, that is, demodulation reference signal (Demodulation Reference Signal, DMRS) ports of the PDSCH and the PDSCH and a reference signal (Reference Signal, RS) of the TCI state indicated by the TCI field are QCL.

When the high-layer parameter tci-PresentInDCI configured for the UE is set to be enabled, or the high-layer parameter tci-PresentInDCI is not configured, if all TCI codepoints activated by a medium access control (Medium Access Control, MAC) control element (Control Element, CE) are mapped to one TCI state and the foregoing time offset is less than the threshold timeDurationForQCL, since the UE has not detected the DCI or completed a reception beam switching operation, the UE may buffer received signals on these symbols by using default reception beams, to demodulate a scheduled PDSCH, for example, a PDSCH0 in FIG. 1, after successful detection of the DCI.

The UE receives the PDSCH by using the default reception beam. That is, the UE may consider that PDSCH transmission of a serving cell and an RS in a QCL parameter are QCL, where the QCL parameter is used for indicate a QCL of a CORESET for PDCCH transmission. The CORESET is a CORESET that has a smallest CORESET index (Index) and is associated with a monitoring search space (Search Space) among one or more CORESETs on an active bandwidth part (BandWidth Part, BWP) of a serving cell monitored by the UE in the most recent slot.

A multiple transmission reception point (Multiple Transmission Reception Point, MTRP) transmission technology is introduced to Rel-16, and in terms of control signaling, there are two cases: single DCI scheduling and multiple DCI scheduling.

In multiple DCI scheduling, each TRP sends a respective PDCCH, each PDCCH schedules a respective PDSCH, and a plurality of CORESETs configured for the UE are associated with different RRC parameters CORESETPoolIndex, corresponding to different TRPs. Specifically, if the network configures a plurality of CORESETs for the UE to associate with different CORESETPoolIndex values to distinguish a TRP to which a CORESET where a detected PDCCH is located belongs, when the high-layer parameter tci-PresentInDCI configured for the UE is set to be enabled or the high-layer parameter tci-PresentInDCI is not configured, and the foregoing time offset is less than timeDurationForQCL, the UE may receive a PDSCH, for example, a PDSCH TRP0 in FIG. 2, by using the default reception beam. In FIG. 2, a PDCCH schedules a PDSCH for a TRP0 (PDCCH scheduling PDSCH for TRP0); and the PDCCH schedules the PDSCH for a TRP1 (PDCCH scheduling PDSCH for TRP1).

The UE uses the default reception beam to receive the PDSCH, that is, the UE may consider that a PDSCH of a serving cell and an RS in a QCL parameter that are associated with a CORESETPoolIndex are QCL. The QCL parameter is used for indicating a QCL of a CORESET for PDCCH transmission. The CORESET is a CORESET that has a smallest CORESET ID and is associated with a monitoring search space (Search Space) among one or more CORESETs associated with the same CORESETPoolIndex as the PDCCH that schedules the PDSCH transmission on an active BWP of a serving cell monitored by the UE in the most recent slot.

In single DCI scheduling, one TRP sends a PDCCH to schedule one PDSCH. The PDSCH includes a plurality of transmission solutions: data of different layers of PDSCH transmission comes from different TRPs; or data on different frequency domain subcarriers comes from different TRPs; or each time domain repetition comes from a different TRP, and so on. In this case, the MAC CE activates a maximum of 8 codepoints (Codepoint), where at least one codepoint in the codepoints activated by the MAC CE corresponds to two TCI states. When a codepoint indicated by a TCI field in one DCI corresponds to two TCI states and one TCI state contains a spatial beam type of QCL (QCL-TypeD), it means that the PDSCH of the foregoing multi-TRP transmission is scheduled, and the specific transmission solution is determined in other manners, for example, high-layer parameter configuration. If the foregoing time offset is less than the threshold indicated by timeDurationForQCL, the UE may use a plurality of default reception beams to receive the PDSCH. That is, the UE may consider that the PDSCH of the serving cell and an RS of two TCI states indicated by a codepoint with the smallest index among codepoints including two different TCI states are QCL.

A QCL determining method according to the embodiments of the present invention is described below.

Referring to FIG. 3, FIG. 3 is a flowchart 1 of a QCL determining method according to an embodiment of the present invention. The QCL determining method shown in FIG. 3 may be performed by a terminal. In practical applications, the terminal may be a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), an in-vehicle device, or the like.

As shown in FIG. 3, the QCL determining method may include the following steps.

Step 301: In a case that there are L first transmission configuration indication TCI codepoints in TCI codepoints activated by a medium access control MAC control element CE, determine, according to detected downlink control information DCI, a QCL relationship of M times of physical downlink shared channel PDSCH transmission scheduled by the DCI, where both L and M are positive integers; each first TCI codepoint indicates P TCI states, P is an integer greater than 1, and the QCL relationship is QCL-typeD.

In this embodiment of the present invention, the DCI may be pre-divided into Q cases, and a QCL relationship determining manner of PDSCH transmission scheduled by the DCI may be pre-set for each case, where Q is a positive integer. In this way, after detecting the DCI, the terminal may determine a case to which the DCI belongs according to at least one of high-layer parameter configuration or DCI indication, and then may use a QCL relationship determining manner corresponding to the case to determine a QCL relationship of PDSCH transmission scheduled by the DCI.

After determining the QCL relationship of the M times of PDSCH transmission scheduled by the DCI, the terminal may determine a reception beam of the PDSCH transmission based on the determined QCL relationship, and then receive the PDSCH transmission according to the determined reception beam, thereby improving the receiving performance of the PDSCH transmission.

In this embodiment of the present invention, the QCL relationship of the PDSCH transmission scheduled by the DCI may be specifically any of the following: a QCL relationship of the PDSCH transmission scheduled by the DCI; a QCL relationship of a DMRS port of the PDSCH transmission scheduled by the DCI; or a QCL relationship of an antenna port of the PDSCH transmission scheduled by the DCI, but is not limited thereto.

In this optional implementation, M is a positive integer. As can be seen that, in this embodiment of the present invention, for the DCI that schedules at least two times of PDSCH transmission, the terminal may also determine a QCL relationship of each scheduled PDSCH transmission.

In the QCL determining method in this embodiment, in a case that there are L first TCI codepoints in TCI codepoints activated by a MAC CE, a terminal may determine, based on detected DCI, a QCL relationship of PDSCH transmission scheduled by the DCI. As can be seen, the embodiments of the present invention provide the method for determining the QCL relationship of PDSCH transmission. Further, the PDSCH transmission can be received based on the determined QCL relationship, thereby improving the performance of the PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

It should be understood that M=N+K. In practical applications, in a case that M=K, it means that time offsets of the M times of PDSCH transmission scheduled by the DCI are all greater than or equal to the threshold; and in a case that M=N, it means that the time offsets of the M times of PDSCH transmission scheduled by the DCI are all less than the threshold.

A time offset of PDSCH transmission may be understood as a symbol interval between the last symbol of a PDCCH where the DCI that schedules the PDSCH transmission is located and the first symbol of the PDSCH transmission. The threshold is preset. Optionally, the threshold may be determined based on at least one of a time required to detect the DCI or a time required to switch reception beams, and is reported by the terminal to the network side device.

The DCI detected by the terminal is any of the following:
first DCI, where the first DCI does not include a TCI field; and
second DCI, where a TCI field in the second DCI indicates P TCI states.

Optionally, the DCI detected by the terminal also may be a third DCI, where a TCI field in the third DCI indicates one TCI state. This embodiment corresponding to the third DCI are not covered by the claimed invention.

In this optional implementation, the cases of the DCI include at least the first DCI, the second DCI, and the third DCI. In a specific implementation, after detecting the DCI, the terminal may first determine, according to the high-layer parameter configuration, whether the DCI includes a detection result of the TCI field, and a quantity of TCI states indicated by the TCI field when the DCI includes the TCI field, the case to which the DCI belongs: the first DCI, the second DCI, or the third DCI. Further, a QCL relationship of PDSCH transmission scheduled by the DCI is determined by using a QCL relationship determining manner corresponding to the case to which the DCI belongs.

The following describes scenarios in which the DCI detected by the terminal is the first DCI, the second DCI, or the third DCI in the foregoing optional implementation.

Scenario 1: The DCI detected by the terminal is the first DCI.

Optionally, the first DCI satisfies any one of the following:
the format of the DCI is DCI format 1_0; or
the format of the DCI is DCI format 1_1 or DCI format 1_2, and the terminal is not configured with a first parameter, where the first parameter is used for indicating that a TCI field appears in the DCI. Optionally, the first parameter may be tci-PresentInDCI.

For Scenario 1, The determining a QCL relationship of M times of PDSCH transmission scheduled by the DCI includes:
determining that first PDSCH transmission has a QCL relationship with a reference signal RS of one of TCI states indicated by a second TCI codepoint.

The first PDSCH transmission is any PDSCH transmission in the M times of PDSCH transmission.

The second TCI codepoint may be a TCI codepoint with a smallest index among the L first TCI codepoints. Each TCI codepoint in the L first TCI codepoints has an index, and a TCI codepoint with the smallest index among the L TCI codepoints may be determined as the second TCI codepoint. For example, assuming that there are three TCI codepoints that indicate more than one TCI states in the TCI codepoints activated by the MAC CE, and indexes of the three TCI codepoints are 1, 4, and 6 respectively, the TCI codepoint with the index of 1 may be determined as the second TCI codepoint. In this way, in a case that the PDSCH transmission has a QCL relationship with a TCI state indicated by the second TCI codepoint, the terminal may use an activated narrower beam to receive the PDSCH with better performance.

It should be understood that, the QCL relationship determining manner corresponding to the first DCI may include at least the foregoing QCL relationship determining manner. For ease of description, the foregoing QCL relationship determining manner is referred to as a first QCL relationship determining manner.

For the first QCL relationship determining manner, a TCI state corresponding to one PDSCH transmission is: one of the P TCI states indicated by the second TCI codepoint. That is, in this QCL relationship determining manner, each PDSCH transmission in the M times of PDSCH transmission corresponds to one of the P TCI states indicated by the second TCI codepoint.

Further, since the quantity of TCI states indicated by the second TCI codepoint is greater than 1, in a case that M is greater than 1, in a first implementation, TCI states corresponding to different PDSCH transmission in the M times of PDSCH transmission may be the same; in a second implementation, in the M times of PDSCH transmission, there may be at least two times of PDSCH transmission corresponding to different TCI states; and in a third implementation, in the M times of PDSCH transmission, TCI states corresponding to any two adjacent PDSCH transmission are different.

For ease of understanding, an example is described below.

It is assumed that the first DCI schedules four times of PDSCH transmission, and the second TCI codepoint indicates two TCI states.

For the foregoing first implementation, TCI states corresponding to the four times of PDSCH transmission scheduled by the first DCI are the same, for example, the four times of PDSCH transmission scheduled by the first DCI all have a QCL relationship with an RS of the first TCI state indicated by the second TCI codepoint.

For the foregoing second implementation, optionally, TCI states corresponding to the first two times of PDSCH transmission scheduled by the first DCI are the same, TCI states corresponding to the last two times of PDSCH transmission scheduled by the first DCI are also the same, but the TCI states corresponding to the first two times of PDSCH transmission scheduled by the first DCI are different from the TCI states corresponding to the last two times of PDSCH transmission scheduled by the first DCI. For example, the first two times of PDSCH transmission scheduled by the first DCI all have a QCL relationship with the RS of the first TCI state indicated by the second TCI codepoint, and the last two times of PDSCH transmission scheduled by the first DCI all have a QCL relationship with an RS of the second TCI state indicated by the second TCI codepoint.

For the foregoing third implementation, optionally, each PDSCH transmission is cyclically mapped to the two TCI states in the second TCI codepoint. That is, the first and third PDSCH transmission scheduled by the first DCI have a QCL relationship with the RS of the first TCI state indicated by the second TCI codepoint, and the second and fourth PDSCH transmission scheduled by the first DCI have a QCL relationship with the RS of the second TCI state indicated by the second TCI codepoint.

Scenario 2: The DCI detected by the terminal is the second DCI.

For Scenario 2, The determining a QCL relationship of M times of PDSCH transmission scheduled by the DCI includes:
determining that first PDSCH transmission has a QCL relationship with an RS of one of TCI states indicated by a second TCI codepoint.

This implementation is the same as the foregoing implementation in scenario 1. For details, reference may be made to the foregoing description, and details are not described herein again.

Optionally, the determining a QCL relationship of M times of PDSCH transmission scheduled by the DCI includes at least one of the following:
determining that second PDSCH transmission has a QCL relationship with an RS of one of TCI states indicated by a second TCI codepoint; or
determining that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Based on the foregoing content, it should be understood that, it may be determined that the second DCI corresponds to at least two QCL relationship determining manners:
the foregoing first QCL relationship determining manner; and
a second QCL relationship determining manner: determining that second PDSCH transmission has a QCL relationship with an RS of one of TCI states indicated by a second TCI codepoint; and/or determining that third PDSCH transmission has a QCL relationship with an RS of one of the TCI states indicated by the TCI field.

The detailed description for the second QCL relationship determining manner is as follows:
a TCI state corresponding to one PDSCH transmission may be: one of the P TCI states indicated by the second TCI codepoint, or one of the P TCI states indicated by the TCI field included in the second DCI.

Specifically, for the first N times of PDSCH transmission in the M times of PDSCH transmission, a TCI state corresponding to each PDSCH transmission may be: one of the P TCI states indicated by the second TCI codepoint. That is, each PDSCH transmission in the first N times of PDSCH transmission may correspond to one of the P TCI states indicated by the second TCI codepoint.

For the last K times of PDSCH transmission in the M times of PDSCH transmission, a TCI state corresponding to each PDSCH transmission may be: one of the P TCI states indicated by the TCI field included in the second DCI. That is, each PDSCH transmission in the last K times of PDSCH transmission may correspond to one of the P TCI states indicated by the TCI field included in the second DCI.

Further, since the quantity of TCI states indicated by the second TCI codepoint is greater than 1, in a case that N is greater than 1, in an implementation, TCI states corresponding to different PDSCH transmission in the first N times of PDSCH transmission may be the same; in another implementation, in the first N times of PDSCH transmission, there may be at least two times of PDSCH transmission corresponding to different TCI states; and in another implementation, in the first N times of PDSCH transmission, TCI states corresponding to any two adjacent PDSCH transmission are different.

In a case that K is greater than 1, in an implementation, TCI states corresponding to different PDSCH transmission in the last K times of PDSCH transmission may be the same; in another implementation, in the last K times of PDSCH transmission, there may be at least two times of PDSCH transmission corresponding to different TCI states; and in another implementation, in the last K times of PDSCH transmission, TCI states corresponding to any two adjacent PDSCH transmission are different.

Scenario 3: The DCI detected by the terminal is the third DCI.

For Scenario 3, optionally, the determining a QCL relationship of M times of PDSCH transmission scheduled by the DCI includes any one of the following:
in a case that the TCI state indicated by the TCI field is the same as one of TCI states in a second TCI codepoint, determining that second PDSCH transmission has a QCL relationship with an RS of the TCI state indicated by the TCI field; or
determining that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the determining a QCL relationship of M times of PDSCH transmission scheduled by the DCI further includes any one of the following:
determining that third PDSCH transmission has a QCL relationship with the RS of the TCI state indicated by the TCI field; or
determining that third PDSCH transmission has a QCL relationship with the second PDSCH transmission, where
the third PDSCH transmission is any PDSCH transmission in last K times of PDSCH transmission in the M times of PDSCH transmission.

It should be understood that, based on the foregoing content, it may be determined that the third DCI corresponds to at least the following four QCL relationship determining manners:
a third QCL relationship determining manner: in a case that the TCI state indicated by the TCI field is the same as one of TCI states in a second TCI codepoint, determining that second PDSCH transmission has a QCL relationship with an RS of the TCI state indicated by the TCI field, and determining that third PDSCH transmission has a QCL relationship with the RS of the TCI state indicated by the TCI field;
a fourth QCL relationship determining manner: in a case that the TCI state indicated by the TCI field is the same as one of TCI states in a second TCI codepoint, determining that second PDSCH transmission has a QCL relationship with an RS of the TCI state indicated by the TCI field, and determining that third PDSCH transmission has a QCL relationship with the second PDSCH transmission;
a fifth QCL relationship determining manner: determining that second PDSCH transmission has a QCL relationship with an RS of one of TCI states indicated by a second TCI codepoint, and determining that third PDSCH transmission has a QCL relationship with the RS of the TCI state indicated by the TCI field; and
a sixth QCL relationship determining manner: determining that second PDSCH transmission has a QCL relationship with an RS of one of TCI states indicated by a second TCI codepoint, and determining that third PDSCH transmission has a QCL relationship with the second PDSCH transmission.

The foregoing QCL relationship determining manners are described below.

In the foregoing third QCL relationship determining manner:
a TCI state corresponding to one PDSCH transmission is a TCI state indicated by a TCI field included in the third DCI. That is, in the third QCL relationship determining manner, each PDSCH transmission in the M times of PDSCH transmission corresponds to the TCI state indicated by the TCI field included in the third DCI.

Since the TCI field included in the third DCI only indicates one TCI state, it may be understood that, in a case that M is greater than 1, TCI states corresponding to the M times of PDSCH transmission are all the same.

In the foregoing fourth QCL relationship determining manner:
a TCI state corresponding to PDSCH transmission in the first N times of PDSCH transmission is a TCI state indicated by the TCI field included in the third DCI.

Since the third PDSCH transmission has a QCL relationship with the RS of the TCI state indicated by the TCI field, it may be understood that, a TCI state corresponding to PDSCH transmission in the last K times of PDSCH transmission is also a TCI state indicated by the TCI field included in the third DCI.

As can be seen, in the foregoing fourth QCL relationship determining manner, each PDSCH transmission in the M times of PDSCH transmission corresponds to the TCI state indicated by the TCI field included in the third DCI.

Since the TCI field included in the third DCI only indicates one TCI state, it may be understood that, in a case that M is greater than 1, TCI states corresponding to the M times of PDSCH transmission are all the same.

As can be seen, the QCL relationship of the M times of PDSCH transmission scheduled by the DCI determined in the foregoing third QCL relationship determining manner is the same as the QCL relationship of the M times of PDSCH transmission scheduled by the DCI determined in the foregoing fourth QCL relationship determining manner.

In the foregoing fifth QCL relationship determining manner:
a TCI state corresponding to one PDSCH transmission may be: one of the P TCI states indicated by the second TCI codepoint, or a TCI state indicated by the TCI field included in the third DCI.

Specifically, for the first N times of PDSCH transmission in the M times of PDSCH transmission, a TCI state corresponding to each PDSCH transmission is: one of the P TCI states indicated by the second TCI codepoint. That is, each PDSCH transmission in the first N times of PDSCH transmission corresponds to one of the P TCI states indicated by the second TCI codepoint.

For the last K times of PDSCH transmission in the M times of PDSCH transmission, a TCI state corresponding to each PDSCH transmission is: a TCI state indicated by the TCI field included in the third DCI. That is, each PDSCH transmission in the last K times of PDSCH transmission corresponds to a TCI state indicated by the TCI field included in the third DCI.

Further, since the quantity of TCI states indicated by the second TCI codepoint is greater than 1, in a case that N is greater than 1, in an implementation, TCI states corresponding to different PDSCH transmission in the first N times of PDSCH transmission may be the same; in another implementation, in the first N times of PDSCH transmission, there may be at least two times of PDSCH transmission corresponding to different TCI states; and in another implementation, in the first N times of PDSCH transmission, TCI states corresponding to any two adjacent PDSCH transmission are different.

Since the TCI field included in the third DCI only indicates one TCI state, it may be understood that, in a case that K is greater than 1, TCI states corresponding to the last K times of PDSCH transmission are all the same.

In the foregoing sixth QCL relationship determining manner:
a TCI state corresponding to PDSCH transmission in the first N times of PDSCH transmission is: one of the P TCI states indicated by the second TCI codepoint.

Since the third PDSCH transmission has a QCL relationship with the RS of the TCI state indicated by the TCI field, it may be understood that, a TCI state corresponding to PDSCH transmission in the last K times of PDSCH transmission is also one of the P TCI states indicated by the second TCI codepoint.

As can be seen, in the sixth QCL relationship determining manner, each PDSCH transmission in the M times of PDSCH transmission corresponds to one of the P TCI states indicated by the second TCI codepoint.

Since the quantity of TCI states indicated by the second TCI codepoint is greater than 1, it may be understood that, in a case that N is greater than 1, in an implementation, TCI states corresponding to different PDSCH transmission in the first N times of PDSCH transmission may be the same; in another implementation, in the first N times of PDSCH transmission, there may be at least two times of PDSCH transmission corresponding to different TCI states; and in another implementation, in the first N times of PDSCH transmission, TCI states corresponding to any two adjacent PDSCH transmission are different.

Since the third PDSCH transmission has a QCL relationship with the RS of the TCI state indicated by the TCI field, in a case that K is greater than 1, in the implementation in which TCI states corresponding to different PDSCH transmission of the first N times of PDSCH transmission are the same, TCI states corresponding to different PDSCH transmission of the last K times of PDSCH transmission are also the same.

In the implementation in which in the first N times of PDSCH transmission, there may be at least two times of PDSCH transmission corresponding to different TCI states, in an optional manner, TCI states corresponding to different PDSCH transmission of the last K times of PDSCH transmission may be the same. In another optional manner, in the last K times of PDSCH transmission, there may be at least two times of PDSCH transmission corresponding to different TCI states, and the TCI states corresponding to the first N times of PDSCH transmission include the TCI states corresponding to the last K times of PDSCH transmission. For example, it is assumed that the third DCI schedules four times of PDSCH transmission, the second TCI codepoint indicates four TCI states, a TCI state corresponding to the first PDSCH transmission is the first TCI state indicated by the second TCI codepoint, and a TCI state corresponding to the second PDSCH transmission is the second TCI state indicated by the second TCI codepoint. In an optional manner, TCI states corresponding to the third PDSCH transmission and the fourth PDSCH transmission may both be the first TCI state indicated by the second TCI codepoint; and in another optional manner, the TCI state corresponding to the third PDSCH transmission may be the second TCI state indicated by the second TCI codepoint, and the TCI state corresponding to the fourth PDSCH transmission may be the first TCI state indicated by the second TCI codepoint.

For the foregoing QCL relationship determining manners, optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

The detailed description is as follows:
in a case that one of the TCI states indicated by the second TCI codepoint is a TCI state agreed in a protocol among the P TCI states indicated by the second TCI codepoint, the one of the TCI states indicated by the second TCI codepoint is agreed in the protocol. For example, assuming that the second TCI codepoint indicates two TCI states, the one of the TCI states indicated by the second TCI codepoint may be the first TCI state or the second TCI state that are indicated by the second TCI codepoint and agreed in the protocol.

In addition, it should be understood that, in a case that M is greater than 1, the protocol may predetermine a TCI state indicated by the second TCI codepoint corresponding to each PDSCH transmission scheduled by the DCI. For example, assuming that the DCI schedules two times of PDSCH transmission, and the second TCI codepoint indicates two TCI states, the protocol may agree that: a TCI state corresponding to the first PDSCH transmission scheduled by the DCI is the first TCI state indicated by the second TCI codepoint, and a TCI state corresponding to the second PDSCH transmission scheduled by the DCI is the second TCI state indicated by the second TCI codepoint.

In a case that one of the TCI states indicated by the second TCI codepoint is a TCI state configured by the network side device among the P TCI states indicated by the second TCI codepoint, the one of the TCI states indicated by the second TCI codepoint is configured by the network side device. In a specific implementation, the network side device may send, before sending the DCI, configuration information for configuring one of the TCI states indicated by the second TCI codepoint. For example, assuming that the second TCI codepoint indicates two TCI states, one of the TCI states indicated by the second TCI codepoint may be the first TCI state or the second TCI state that are configured by the network side device and indicated by the second TCI codepoint.

In addition, it should be understood that, in a case that M is greater than 1, the network side device may configure a corresponding TCI state indicated by the second TCI codepoint for each PDSCH transmission scheduled by the DCI. For example, assuming that the DCI schedules two times of PDSCH transmission, and the second TCI codepoint indicates two TCI states, the network side device may configure that: a TCI state corresponding to the first PDSCH transmission scheduled by the DCI is the second TCI state indicated by the second TCI codepoint, and a TCI state corresponding to the second PDSCH transmission scheduled by the DCI is the first TCI state indicated by the second TCI codepoint.

In a case that one of the TCI states indicated by the second TCI codepoint is a TCI state the same as a TCI state corresponding to the CORESET where the DCI is located among the P TCI states indicated by the second TCI codepoint, it means that there is a TCI state the same as the TCI state corresponding to the CORESET where the DCI is located among the TCI states indicated by the TCI codepoint. It should be understood that, if there is no TCI state the same as the TCI state corresponding to the CORESET where the DCI is located among the TCI states indicated by the TCI codepoint, one of the TCI states indicated by the second TCI codepoint cannot be determined in this manner.

In this embodiment of the present invention, in a case that M is greater than 1, optionally, the first TCI state satisfies any one of the following:
determined according to a cyclic mapping mode; or
determined according to a sequential mapping mode, where
the first TCI states include: M TCI states respectively corresponding to the M times of PDSCH transmission, or first N TCI states in the M TCI states.

It should be understood that the first N TCI states are: N TCI states corresponding to the first N times of PDSCH transmission in the M times of PDSCH transmission; and the last K TCI states in the M TCI states are: K TCI states corresponding to the last K times of PDSCH transmission in the M times of PDSCH transmission.

This optional implementation may be mainly used for determine that: each TCI state in the M TCI states is specifically which TCI state of a target object. The target object may be the second TCI codepoint or the TCI field, and the target object indicates P TCI states.

Therefore, it may be understood that, this optional implementation may be mainly applied to the foregoing first QCL relationship determining manner, the foregoing second QCL relationship determining manner, the foregoing fifth QCL relationship determining manner, and the foregoing sixth QCL relationship determining manner.

In the scenario in which this optional implementation is applied to the foregoing first QCL relationship determining manner, the first TCI state includes the M TCI states; and a target object corresponding to each TCI state in the M TCI states is the second TCI codepoint.

In the scenario in which this optional implementation is applied to the foregoing second QCL relationship determining manner, the first TCI state includes the M TCI states; and A target object corresponding to each TCI state in the first N TCI states in the M TCI states is the second TCI codepoint, and a target object corresponding to each TCI state in the first N TCI states is the TCI field.

For the scenario in which this optional implementation is applied to the foregoing fifth QCL relationship determining manner, in the fifth QCL relationship determining manner, since the third PDSCH transmission has a QCL relationship with the RS of the TCI state indicated by the TCI field, and the TCI field only indicates one TCI state, the last K TCI states among the M TCI states are unique. Therefore, the first TCI states include first N TCI states in the M TCI states. A target object corresponding to each TCI state in the first N TCI states in the M TCI states is the second TCI codepoint.

In the scenario in which this optional implementation is applied to the foregoing sixth QCL relationship determining manner, the detailed description is as follows.

If the last K times of PDSCH transmission satisfy a first condition, the first TCI states may include the first N TCI states of the M TCI states; and if the last K times of PDSCH transmission do not satisfy the first condition, the first TCI states may include the M TCI states, where the first condition is that: the last K times of PDSCH transmission all have a QCL relationship with the same PDSCH transmission in the first N times of PDSCH transmission. In addition, a target object corresponding to each TCI state in the M TCI states is the second TCI codepoint.

The first case in which the first TCI states are determined according to the cyclic mapping mode, and the second case in which the first TCI states are determined according to the continuous cyclic mode are described below.

For the first case, optionally, the first TCI states satisfy any one of the following:
a: an i-th TCI state of every P TCI states in the first TCI states has a mapping relationship with an i-th TCI state in P TCI states indicated by a target object; or
b: an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

It should be understood that, in a case that the first TCI states include only the first N TCI states of the M TCI states, the foregoing a and the foregoing b are the same.

In a case where the first TCI states include the M TCI states, the foregoing a and the foregoing b are different. Specifically, in the foregoing a, the M TCI states are divided in units of the P TCI states; and in the foregoing b, the M TCI states are first divided into the first N TCI states and the last K TCI states, the first N TCI states are then divided in units of the P TCI states, and the last K TCI states are divided in units of the P TCI states.

In the case in which the first TCI states satisfy the foregoing a:
in a specific implementation, optionally, the first TCI states may be sequentially divided into a plurality of groups in units of the P TCI states, and TCI states included in the last group may be less than or equal to P. For each TCI state group, an i-th TCI state has a mapping relationship with an i-th TCI state in the P TCI states indicated by the target object.

In the case in which the first TCI states satisfy the foregoing b:
in a specific implementation, optionally, the first TCI states may be first divided into two large groups. The first large TCI state group includes the first N TCI states in the M TCI states, and the second large state group includes the last K TCI states in the M TCI states.

The first large TCI state group may then be sequentially divided into a plurality of small groups in units of the P TCI states, and TCI states included in the last small group may be less than or equal to P. For each small TCI state group of the first large TCI state group, an i-th TCI state has a mapping relationship with an i-th TCI state in the P TCI states indicated by the target object.

The second large TCI state group may then be sequentially divided into a plurality of small groups in units of the P TCI states, and TCI states included in the last small group may be less than or equal to P. For each small TCI state group of the second large TCI state group, an i-th TCI state has a mapping relationship with an i-th TCI state in the P TCI states indicated by the target object.

However, it should be understood that if N is an integer multiple of P, that is, each TCI state group in the plurality of TCI state groups obtained by dividing the first N TCI states includes P TCI states, TCI states of target objects corresponding to the last K TCI states are the same in the case in which the first TCI states satisfy the foregoing a and in the case in which the first TCI states satisfy the foregoing b. Otherwise, the TCI states of the target objects corresponding to the last K TCI states are different in the case in which the first TCI states satisfy the foregoing a and in the case in which the first TCI states satisfy the foregoing b.

For ease of understanding, an example is described below.

It is assumed that the terminal determines that the detected DCI is the second DCI, the second DCI schedules five times of PDSCH transmission, a time offset of the first three times of PDSCH transmission is less than a threshold, and a time offset of the last two times of PDSCH transmission is greater than or equal to the threshold; the DCI includes a TCI field, and the TCI field indicates two TCI states; and the second TCI codepoint indicates two TCI states.

Assuming that the foregoing second QCL relationship determining manner is used to determine a QCL relationship of the M times of PDSCH transmission scheduled by the second DCI, it may be determined that a TCI state corresponding to the first PDSCH transmission to the third PDSCH transmission is: a TCI state indicated by the second TCI codepoint; and a TCI state corresponding to the fourth PDSCH transmission to the fifth PDSCH transmission is: a TCI state indicated by the TCI field.

In the case in which the first TCI states satisfy the foregoing a:
five TCI states may be sequentially divided into three TCI state groups. The first TCI state group includes the first TCI state and the second TCI state, the second TCI state group includes the third TCI state and the fourth TCI state, and the third TCI state group includes the fifth TCI state.

According to the cyclic mapping relationship, it may be determined that the first TCI state is the first TCI state indicated by the second TCI codepoint; the second TCI state is the second TCI state indicated by the second TCI codepoint; the third TCI state is the first TCI state indicated by the second TCI codepoint; the fourth TCI state is the second TCI state indicated by the TCI field; and the fifth TCI state is the first TCI state indicated by the TCI field.

In the case in which the first TCI states satisfy the foregoing b:
five TCI states may be sequentially divided into two large TCI state groups. The first large TCI state group includes the first TCI state, the second TCI state, and the third TCI state, and the second large TCI state group includes the fourth TCI state and the fifth TCI state.

The first large TCI state group is divided into two small TCI state groups. One of the small TCI state groups includes the first TCI state and the second TCI state, and the other small TCI state group includes the third TCI state.

The second large TCI state group is divided into one small TCI state group, including the fourth TCI state and the fifth TCI state.

According to the cyclic mapping relationship, it may be determined that the first TCI state is the first TCI state indicated by the second TCI codepoint; the second TCI state is the second TCI state indicated by the second TCI codepoint; the third TCI state is the first TCI state indicated by the second TCI codepoint; the fourth TCI state is the first TCI state indicated by the TCI field; and the fifth TCI state is the second TCI state indicated by the TCI field.

As can be seen, in this example, the TCI states of the target objects corresponding to the last K TCI states are different in the case in which the first TCI states satisfy the foregoing a and in the case in which the first TCI states satisfy the foregoing b.

For the second case, optionally, the first TCI states satisfy any one of the following:
c: a (2i-1)-th TCI state to a (2i)-th TCI state of every 2P TCI states in the first TCI states have a mapping relationship with an i-th TCI state in P TCI states indicated by a target object; or
d: a (2i-1)-th TCI state to a (2i)th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.
   c in the sequential mapping mode corresponds to a in the cyclic mapping mode, and d in the sequential mapping mode corresponds to b in the cyclic mapping mode. The implementation principle is the same as that in the cyclic mapping mode, and details are not described herein again.

The main difference between the sequential mapping mode and the cyclic mapping mode is:
in the cyclic mapping mode, the first TCI states are divided in units of P TCI states. In the sequential mapping mode, the first TCI states are divided in units of 2P TCI states, and every two TCI states from the first TCI state in every 2P TCI states correspond to the same TCI state of the target object.

In the cyclic mapping mode, if N is an integer multiple of P, that is, each TCI state group in the plurality of TCI state groups obtained by dividing the first N TCI states includes P TCI states, TCI states of target objects corresponding to the last K TCI states are the same in the case in which the first TCI states satisfy the foregoing a and in the case in which the first TCI states satisfy the foregoing b. Otherwise, the TCI states of the target objects corresponding to the last K TCI states are different in the case in which the first TCI states satisfy the foregoing a and in the case in which the first TCI states satisfy the foregoing b. In the sequential mapping mode, if N is an integer multiple of 2P, that is, each TCI state group in the plurality of TCI state groups obtained by dividing the first N TCI states includes 2P TCI states, TCI states of target objects corresponding to the last K TCI states are the same in the case in which the first TCI states satisfy the foregoing c and in the case in which the first TCI states satisfy the foregoing d. Otherwise, the TCI states of the target objects corresponding to the last K TCI states are different in the case in which the first TCI states satisfy the foregoing c and in the case in which the first TCI states satisfy the foregoing d.

For ease of understanding, an example is described below:
it is assumed that the terminal determines that the detected DCI is the second DCI, the second DCI schedules five times of PDSCH transmission, a time offset of the first three times of PDSCH transmission is less than a threshold, and a time offset of the last two times of PDSCH transmission is greater than or equal to the threshold; the DCI includes a TCI field, and the TCI field indicates two TCI states; and the second TCI codepoint indicates two TCI states.

Assuming that the foregoing second QCL relationship determining manner is used to determine a QCL relationship of the M times of PDSCH transmission scheduled by the second DCI, it may be determined that a TCI state corresponding to the first PDSCH transmission to the third PDSCH transmission is: a TCI state indicated by the second TCI codepoint; and a TCI state corresponding to the fourth PDSCH transmission to the fifth PDSCH transmission is: a TCI state indicated by the TCI field.

In the case in which the first TCI states satisfy the foregoing c:
five TCI states may be sequentially divided into two TCI state groups. The first TCI state group includes the first TCI state, the second TCI state, the third TCI state, and the fourth TCI state, and the second TCI state group includes the fifth TCI state.

According to the continuous mapping relationship, it may be determined that the first TCI state is the first TCI state indicated by the second TCI codepoint; the second TCI state is the first TCI state indicated by the second TCI codepoint; the third TCI state is the second TCI state indicated by the second TCI codepoint; the fourth TCI state is the second TCI state indicated by the TCI field; and the fifth TCI state is the first TCI state indicated by the TCI field.

In the case in which the first TCI states satisfy the foregoing d:
five TCI states may be sequentially divided into two large TCI state groups. The first large TCI state group includes the first TCI state, the second TCI state, and the third TCI state, and the second large TCI state group includes the fourth TCI state and the fifth TCI state.

Since the quantity of each large TCI state group is less than 4, the large TCI state groups may not be further divided.

According to the continuous mapping relationship, it may be determined that the first TCI state is the first TCI state indicated by the second TCI codepoint; the second TCI state is the first TCI state indicated by the second TCI codepoint; the third TCI state is the second TCI state indicated by the second TCI codepoint; the fourth TCI state is the first TCI state indicated by the TCI field; and the fifth TCI state is the first TCI state indicated by the TCI field.

As can be seen, in this example, the TCI states of the target objects corresponding to the last K TCI states are different in the case in which the first TCI states satisfy the foregoing c and in the case in which the first TCI states satisfy the foregoing d.

In this embodiment of the present invention, optionally, the cyclic mapping mode or the sequential mapping mode is indicated by received indication information, thereby improving the flexibility of determining the first TCI states.

Certainly, in some other implementations, the cyclic mapping mode or the continuous cyclic mode may be pre-stored to reduce signaling overheads compared with being indicated by the indication information.

In this embodiment of the present invention, optionally, in a case that M is greater than 1, the M times of PDSCH transmission may be performed in W slots, where W is a positive integer less than or equal to M. As can be seen, in this embodiment of the present invention, the following three implementations may be included:
in the first implementation, the M times of PDSCH transmission may be performed in one slot;
in the second implementation, the M times of PDSCH transmission may be transmitted in M slots, and one PDSCH transmission among the M times of PDSCH transmission is performed in each slot;
in the third implementation, the M times of PDSCH transmission may be performed in E slots, where E is an integer greater than 1 and less than or equal to M. It should be understood that, among the E slots, there is at least one slot in which at least two times of PDSCH transmission are performed.

For ease of understanding, an example is described below: assuming that M is 4.

In the foregoing first implementation, four times of PDSCH transmission are performed in one slot.

In the foregoing second implementation, four times of PDSCH transmission are performed in four slots, and one PDSCH transmission is performed in each slot.

In the foregoing third implementation, optionally, four times of PDSCH transmission may be performed in two slots, for example, the first two times of PDSCH transmission are performed in one slot, and the last two times of PDSCH transmission are performed in the other slot.

Referring to FIG. 4, FIG. 4 is a flowchart 2 of a QCL determining method according to an embodiment of the present invention. The QCL determining method shown in FIG. 4 may be performed by a network side device. In practical applications, the network side device may be a base station, a relay, an access point, or the like.

As shown in FIG. 4, the QCL determining method may include the following steps.

Step 401: In a case that there are L first TCI codepoints in TCI codepoints activated by a MAC CE, determine, according to sent DCI, a QCL relationship of M times of PDSCH transmission scheduled by the DCI, where both L and M are positive integers; each first TCI codepoint indicates P TCI states, P is an integer greater than 1, and the QCL relationship is QCL-typeD.

In the QCL determining method in this embodiment, in a case that there are L first TCI codepoints in TCI codepoints activated by a MAC CE, a network side device may determine, based on sent DCI, a QCL relationship of PDSCH transmission scheduled by the DCI. As can be seen, the embodiments of the present invention provide the method for determining the QCL relationship of PDSCH transmission. Further, the PDSCH transmission can be received based on the determined QCL relationship, thereby improving the performance of the PDSCH transmission.

The DCI is any one of the following:
first DCI, where the first DCI does not include a TCI field; and
second DCI, where a TCI field in the second DCI indicates P TCI states.

In a case that the DCI is the first DCI or the second DCI, the determining a QCL relationship of M times of PDSCH transmission scheduled by the DCI includes:
determining that first PDSCH transmission has a QCL relationship with a reference signal RS of one of TCI states indicated by a second TCI codepoint, where
the first PDSCH transmission is any PDSCH transmission in the M times of PDSCH transmission; and the second TCI codepoint is a TCI codepoint with a smallest index among the L first TCI codepoints.

Optionally, in a case that the DCI is the second DCI, the determining a QCL relationship of M times of PDSCH transmission scheduled by the DCI includes at least one of the following:
determining that second PDSCH transmission has a QCL relationship with an RS of one of TCI states indicated by a second TCI codepoint; or
determining that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Optionally, in a case that the DCI is the third DCI, the determining a QCL relationship of M times of PDSCH transmission scheduled by the DCI includes any one of the following:
in a case that the TCI state indicated by the TCI field is the same as one of TCI states in a second TCI codepoint, determining that second PDSCH transmission has a QCL relationship with an RS of the TCI state indicated by the TCI field; or
determining that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the determining a QCL relationship of M times of PDSCH transmission scheduled by the DCI further includes any one of the following:
determining that third PDSCH transmission has a QCL relationship with the RS of the TCI state indicated by the TCI field; or
determining that third PDSCH transmission has a QCL relationship with the second PDSCH transmission, where
the third PDSCH transmission is any PDSCH transmission in last K times of PDSCH transmission in the M times of PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

Optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

Optionally, in a case that M is greater than 1, first TCI states are:
determined according to a cyclic mapping mode; and
determined according to a sequential mapping mode, where
the first TCI states include: M TCI states respectively corresponding to the M times of PDSCH transmission, or first N TCI states in the M TCI states.

Optionally, in a case that the first TCI states are determined according to the cyclic mapping mode, the first TCI states satisfy any one of the following:
an i-th TCI state of every P TCI states in the first TCI states has a mapping relationship with an i-th TCI state in P TCI states indicated by a target object; or
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

Optionally, in a case that the first TCI states are determined according to the sequential mapping mode, the first TCI states satisfy any one of the following:
a (2i-1)-th TCI state to a (2i)-th TCI state of every 2P TCI states in the first TCI states have a mapping relationship with an i-th TCI state in P TCI states indicated by a target object; or
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.

Optionally, the cyclic mapping mode or the sequential mapping mode is indicated by received indication information.

It should be noted that, this embodiment is an embodiment of the network side device corresponding to the foregoing method embodiment. Therefore, reference may be made to the related description in the method embodiment corresponding to FIG. 3, and the same beneficial effects can be achieved. To avoid repetition, details are not described herein again.

In addition, the various optional implementations described in the embodiments of the present invention may be implemented in combination with each other, or may be implemented independently, which are not limited in the embodiments of the present invention.

For ease of understanding, an example is described below.
1. If at least one codepoint in at least one codepoint (Codepoint) activated by the MAC CE corresponds to two different TCI states, the UE needs to use two default reception beams to receive signals before the threshold. The default reception beams are determined by a TCI state of preset TCI, and a preset TCI codepoint is a codepoint with the smallest index among at least one codepoint activated by the MAC CE that includes two different TCI states. After DCI detection, for the DCI format 1_0 (excluding a TCI field) or the DCI format 1_1 or DCI format 1_2 without the high-layer parameter tci-PresentInDCI configured, if at least one codepoint in the at least one codepoint activated by the MAC CE corresponds to two TCI states, the UE may consider that a DMRS port of the PDSCH of the serving cell and an RS of a first/second TCI state indicated by the preset TCI codepoint are QCL.

In particular, the DMRS port and an RS of the first TCI state of the two TCI states indicated by the codepoint with the smallest index among the codepoints including two different TCI states are QCL. Benefit: The PDSCH can be received with an activated narrower beam with better performance.

The DCI format 1_0 indicates that a time offset (a symbol interval between the last symbol of the PDCCH where the DCI is located and the first symbol of the scheduled PDSCH transmission) of the scheduled PDSCH transmission is less than the threshold timeDurationForQCL and greater than or equal to the threshold timeDurationForQCL.

2. If at least one codepoint in at least one codepoint (Codepoint) activated by the MAC CE corresponds to two different TCI states, when the UE is configured or indicated for multiple time-division transmission of the PDSCH in one slot or between a plurality of slots, the UE needs to use two default reception beams to receive signals before the threshold. The default reception beams are determined by a TCI state of preset TCI, and a preset TCI codepoint is a codepoint with the smallest index among at least one codepoint activated by the MAC CE that includes two different TCI states. After DCI detection:

2.1 If the TCI codepoint in the DCI indicates two different TCI states and indicates M times of PDSCH transmission, a time offset of the first N (N≤M) times of PDSCH transmission is less than the threshold, and a time offset of an (N+1)-th and subsequent PDSCH transmission is greater than or equal to the threshold, then:

2.1.1 A DMRS port of an n-th PDSCH transmission in the first N times of PDSCH transmission and an RS of one of the TCI states indicated by the preset TCI codepoint are QCL, and a DMRS port of the (N+1)-th and subsequent PDSCH transmission and an RS of one of the TCI states indicated by the TCI codepoint in the DCI are QCL.

The time offset is a quantity of symbols between the last symbol of the PDCCH where the DCI is located and the first symbol of the scheduled n-th PDSCH.

2.1.1.1 If two times of PDSCH transmission are transmitted in one slot (that is, at least the RRC parameters are configured as schemeTDM), a time offset of the first PDSCH transmission is less than the threshold, and a time offset of the second PDSCH transmission is greater than or equal to the threshold, a DMRS port of the first PDSCH transmission and the RS of the first TCI state in the preset TCI codepoint are QCL, and a DMRS port of the second PDSCH transmission and an RS of the second (or first) TCI state indicated by the TCI codepoint in the DCI are QCL.

If the time offsets of the two times of PDSCH transmission are less than the threshold, the DMRS port of the first PDSCH transmission and the RS of the first TCI state in the preset TCI codepoint are QCL, and the DMRS port of the second PDSCH transmission and the RS of the second TCI state in the preset TCI codepoint are QCL.

2.1.1.2 If M times of PDSCH transmission are performed in a plurality of slots (that is, at least a quantity of repetitions indicated by a TDRA field in the DCI is greater than 1, or a quantity of repetitions in the RRC parameter configuration is greater than 1), and the time offset of the first N (N≤M) times of PDSCH transmission is less than the threshold, the time offset of the (N+1)-th and subsequent PDSCH transmission is greater than or equal to the threshold.

2.1.1.2.1 If the RRC parameters are configured as the cyclic mapping mode (CycMapping, in which the TCI states alternately correspond to each PDSCH transmission), DMRS ports of the first to n-th PDSCH transmission and the RS of the two TCI states in the preset TCI codepoint are alternately QCL. For example, the DMRS port of the first PDSCH transmission and the RS of the first TCI state indicated by the preset TCI codepoint are QCL; the DMRS port of the second PDSCH transmission and the RS of the second TCI state indicated by the preset TCI codepoint are QCL; the DMRS port of the third PDSCH transmission and the RS of the first TCI state indicated by the preset TCI codepoint are QCL; the DMRS port of the fourth PDSCH transmission and the RS of the second TCI state indicated by the preset TCI codepoint are QCL, and so on, until the n-th PDSCH transmission.

A TCI state corresponding to the DMRS of the (N+1)-th PDSCH transmission continues the n-th PDSCH transmission. For example, if the DMRS port of the n-th PDSCH transmission and the RS of the first/second TCI state indicated by the preset TCI codepoint are QCL, a DMRS port of the (N+1)-th PDSCH transmission and the RS of the second/first TCI state indicated by the TCI codepoint in the DCI are QCL, a DMRS port of the (N+2)-th PDSCH transmission and the RS of the first/second TCI state indicated by the TCI codepoint in the DCI are QCL, and so on.

Alternatively, the process may be re-started. That is, whether the DMRS port of the n-th PDSCH transmission and the RS of which TCI state indicated by the preset TCI codepoint are QCL, the DMRS port of the (N+1)-th PDSCH transmission and the RS of the first/second TCI state indicated by the TCI codepoint in the DCI are QCL, the DMRS port of the (N+2)-th PDSCH transmission and the RS of the second/first TCI state indicated by the TCI codepoint in the DCI are QCL, and so on.

2.1.1.2.2 If the RRC parameters are configured as the sequential mapping mode (SeqMapping, in which two consecutive times of PDSCH transmission correspond to the same TCI state), the DMRS ports of the first and second PDSCH transmission and the RS of the first TCI state indicated by the preset TCI codepoint are QCL; and the DMRS ports of the third and fourth PDSCH transmission and the RS of the second TCI state indicated by the preset TCI codepoint are QCL, and so on, until the n-th PDSCH transmission.

The TCI state corresponding to the DMRS of the (N+1)-th PDSCH transmission continues the n-th PDSCH transmission. For example, if the DMRS port of the (N-1)-th and the n-th PDSCH transmission and the RS of the first/second TCI state indicated by the preset TCI codepoint are QCL, the DMRS ports of the (N+1)-th and the (N+2)-th PDSCH transmission and the RS of the second/first TCI state indicated by the TCI codepoint in the DCI are QCL, and so on. If the DMRS port of the (N-1)-th PDSCH transmission and the RS of the first/second TCI state indicated by the preset TCI codepoint are QCL, and the DMRS port of the n-th PDSCH transmission and the RS of the second/first TCI state indicated by the preset TCI codepoint are QCL, the DMRS port of the (N+1)-th PDSCH transmission and the RS of the second/first TCI state indicated by the TCI codepoint in the DCI are QCL, the DMRS ports of the (N+2)-th and the (N+3)-th PDSCH transmission and the RS of the first/second TCI state indicated by the TCI codepoint in the DCI are QCL, and so on.

Alternatively, the process may be re-started. That is, whether the DMRS port of the n-th PDSCH transmission and the RS of which TCI state indicated by the preset TCI codepoint are QCL, the DMRS ports of the (N+1)-th and the (N+2)-th PDSCH transmission and the RS of the first/second TCI state indicated by the TCI codepoint in the DCI are QCL, the DMRS ports of the (N+3)-th and the (N+4)-th PDSCH transmission and the RS of the second/first TCI state indicated by the TCI codepoint in the DCI are QCL, and so on.

2.1.2 If the TCI codepoint in the DCI indicates two different TCI states and indicates M times of PDSCH transmission, a time offset of the first N (N≤M) times of PDSCH transmission is less than the threshold, and a time offset of an (N+1)-th and subsequent PDSCH transmission is greater than or equal to the threshold, a DMRS port of an n-th PDSCH transmission in the M times of PDSCH transmission and an RS of one of the TCI states indicated by the preset TCI codepoint are QCL.

2.2 If the TCI codepoint in the DCI indicates one TCI state and indicates M times of PDSCH transmission, a time offset of the first N (N≤M) times of PDSCH transmission is less than the threshold, and a time offset of an (N+1)-th and subsequent PDSCH transmission is greater than or equal to the threshold, then:

2.2.1 If a TCI state indicated by the TCI codepoint in the DCI is the same as a TCI state in the preset TCI state, a DMRS port of each of the first N times of PDSCH transmission and an RS of a TCI state indicated by the TCI codepoint in the DCI are QCL.

2.2.2 Regardless of whether being the same or not, a DMRS port of each of the first N times of PDSCH transmission and the RS of the first or second TCI state indicated by the preset TCI codepoint are QCL.

2.2.3 DMRS ports of the (N+1)-th and each subsequent PDSCH transmission and an RS of a TCI state indicated by the TCI codepoint in the DCI are QCL, or the DMRS ports of the (N+1)-th and each subsequent PDSCH transmission and a DMRS port of each of the first N times of PDSCH transmission are QCL.

2.3 If the TCI codepoint in the DCI indicates one TCI state and indicates one PDSCH transmission, and a time offset of the PDSCH transmission is less than the threshold.

2.3.1 If a TCI state indicated by the TCI codepoint in the DCI is the same as a TCI state in the preset TCI state, a DMRS port of the PDSCH transmission and an RS of a TCI state indicated by the TCI codepoint are QCL.

2.3.2 Regardless of whether being the same or not, the RS of the first or second TCI state indicated by the preset TCI codepoint are QCL.

In this embodiment of the present invention, when the TCI codepoint activated by the MAC CE includes two different TCI states, the UE may perform reception by using the two TCI states of the preset TCI. The default QCL of the scheduled PDSCH in DCI format 1_0, DCI format 1_1 or DCI format 1_2 without the high-layer parameter tci-PresentInDCI configured corresponds to one of the TCI states of the preset TCI codepoint. If the M times of PDSCH transmission are configured to be sent in the time domain and there are N times of PDSCH transmission whose time offset is less than the threshold, and the quantity of TCI states indicated by the DCI is equal to 2 or 1, the default QCL of the N times of PDSCH transmission corresponds to two TCI states in the preset TCI codepoint according to the rules, and the QCL of the (N+1)-th and subsequent PDSCH transmission is determined according to specific rules.

This embodiment of the present invention specifies the default QCL determining method for the PDSCH in cases of DCI format 1_0 scheduling, DCI format 1_1 or DCI format 1_2 without the high-layer parameter tci-PresentInDCI configured, and the scheduling of a plurality of times of PDSCH transmission when the TCI codepoint activated by the MAC CE includes two different TCI states. According to the defined default QCL, the PDSCH receiving performance can be improved when the scheduling time offset is smaller than the threshold.

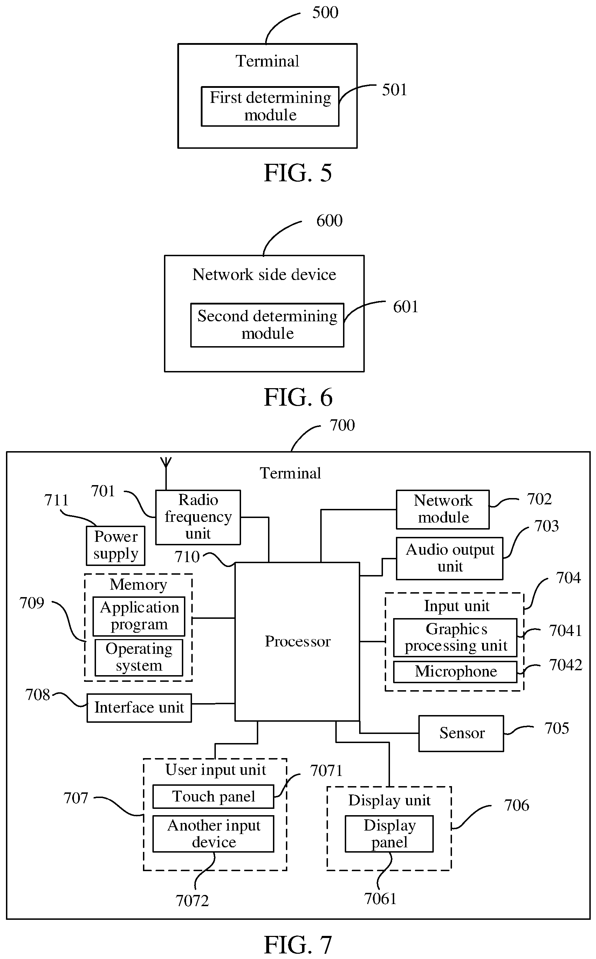

Referring to FIG. 5, FIG. 5 is a structural diagram 1 of a terminal according to an embodiment of the present invention. As shown in FIG. 5, a terminal 500 includes:
a first determining module 501, configured to: in a case that there are L first transmission configuration indication TCI codepoints in TCI codepoints activated by a medium access control MAC control element CE, determine, according to detected downlink control information DCI, a QCL relationship of M times of physical downlink shared channel PDSCH transmission scheduled by the DCI, where
both L and M are positive integers; each first TCI codepoint indicates P TCI states, P is an integer greater than 1, and the QCL relationship is QCL-typeD.

The DCI is any one of the following:
first DCI, where the first DCI does not include a TCI field; and
second DCI, where a TCI field in the second DCI indicates P TCI states.

When the DCI is the first DCI or the second DCI, the first determining module 501 is further configured to:
determine that first PDSCH transmission has a QCL relationship with a reference signal RS of one of TCI states indicated by a second TCI codepoint, where
the first PDSCH transmission is any PDSCH transmission in the M times of PDSCH transmission; and the second TCI codepoint is a TCI codepoint with a smallest index among the L first TCI codepoints.

Optionally, when the DCI is the second DCI, the first determining module 501 is further configured to perform at least one of the following:
determine that second PDSCH transmission has a QCL relationship with an RS of one of TCI states indicated by a second TCI codepoint; or
determine that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Optionally, when the DCI is the third DCI, the first determining module 501 is further configured to perform any one of the following:
in a case that the TCI state indicated by the TCI field is the same as one of TCI states in a second TCI codepoint, determine that second PDSCH transmission has a QCL relationship with an RS of the TCI state indicated by the TCI field; or
determine that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the first determining module 501 is further configured to perform any one of the following:
determine that third PDSCH transmission has a QCL relationship with the RS of the TCI state indicated by the TCI field; or
determine that third PDSCH transmission has a QCL relationship with the second PDSCH transmission, where
the third PDSCH transmission is any PDSCH transmission in last K times of PDSCH transmission in the M times of PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

Optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

Optionally, in a case that M is greater than 1, first TCI states are:
determined according to a cyclic mapping mode; and
determined according to a sequential mapping mode, where
the first TCI states include: M TCI states respectively corresponding to the M times of PDSCH transmission, or first N TCI states in the M TCI states.

Optionally, in a case that the first TCI states are determined according to the cyclic mapping mode, the first TCI states satisfy any one of the following:
an i-th TCI state of every P TCI states in the first TCI states has a mapping relationship with an i-th TCI state in P TCI states indicated by a target object; or
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

Optionally, in a case that the first TCI states are determined according to the sequential mapping mode, the first TCI states satisfy any one of the following:
a (2i-1)-th TCI state to a (2i)-th TCI state of every 2P TCI states in the first TCI states have a mapping relationship with an i-th TCI state in P TCI states indicated by a target object; or
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.

Optionally, the cyclic mapping mode or the sequential mapping mode is indicated by received indication information.

The terminal 500 can implement the processes that can be implemented by the terminal in the method embodiments of the present invention, to achieve the same beneficial effects. To avoid repetition, details are not described herein again.

Referring to FIG. 6, FIG. 6 is a structural diagram 1 of a network side device according to an embodiment of the present invention. As shown in FIG. 6, a network side device 600 includes:
a second determining module 601, configured to: in a case that there are L first TCI codepoints in TCI codepoints activated by a MAC CE, determine, according to sent DCI, a QCL relationship of M times of PDSCH transmission scheduled by the DCI, where
both L and M are positive integers; each first TCI codepoint indicates P TCI states, P is an integer greater than 1, and the QCL relationship is QCL-typeD.

The DCI is any one of the following:
first DCI, where the first DCI does not include a TCI field; and
second DCI, where a TCI field in the second DCI indicates P TCI states.

When the DCI is the first DCI or the second DCI, the second determining module 601 is further configured to:
determine that first PDSCH transmission has a QCL relationship with a reference signal RS of one of TCI states indicated by a second TCI codepoint, where
the first PDSCH transmission is any PDSCH transmission in the M times of PDSCH transmission; and the second TCI codepoint is a TCI codepoint with a smallest index among the L first TCI codepoints.

Optionally, when the DCI is the second DCI, the second determining module 601 is further configured to perform at least one of the following:
determine that second PDSCH transmission has a QCL relationship with an RS of one of TCI states indicated by a second TCI codepoint; or
determine that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Optionally, when the DCI is the third DCI, the second determining module 601 is further configured to perform any one of the following:
in a case that the TCI state indicated by the TCI field is the same as one of TCI states in a second TCI codepoint, determine that second PDSCH transmission has a QCL relationship with an RS of the TCI state indicated by the TCI field; or
determine that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the second determining module 601 is further configured to perform any one of the following:
determine that third PDSCH transmission has a QCL relationship with the RS of the TCI state indicated by the TCI field; or
determine that third PDSCH transmission has a QCL relationship with the second PDSCH transmission, where
the third PDSCH transmission is any PDSCH transmission in last K times of PDSCH transmission in the M times of PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

Optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

Optionally, in a case that M is greater than 1, first TCI states are:
determined according to a cyclic mapping mode; and
determined according to a sequential mapping mode, where
the first TCI states include: M TCI states respectively corresponding to the M times of PDSCH transmission, or first N TCI states in the M TCI states.

Optionally, in a case that the first TCI states are determined according to the cyclic mapping mode, the first TCI states satisfy any one of the following:
an i-th TCI state of every P TCI states in the first TCI states has a mapping relationship with an i-th TCI state in P TCI states indicated by a target object; or
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

Optionally, in a case that the first TCI states are determined according to the sequential mapping mode, the first TCI states satisfy any one of the following:
a (2i-1)-th TCI state to a (2i)-th TCI state of every 2P TCI states in the first TCI states have a mapping relationship with an i-th TCI state in P TCI states indicated by a target object; or
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.

Optionally, the cyclic mapping mode or the sequential mapping mode is indicated by received indication information.

The network side device 600 can implement the processes that can be implemented by the network side device in the method embodiments of the present invention, to achieve the same beneficial effects. To avoid repetition, details are not described herein again.

Referring to FIG. 7, FIG. 7 is a structural diagram 2 of a terminal according to an embodiment of the present invention, which is a schematic diagram of a hardware structure of a terminal that may be a terminal for implementing the embodiments of the present invention. As shown in FIG. 7, a terminal 700 includes, but is not limited to, components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that the terminal structure shown in FIG. 7 does not constitute a limitation on the terminal, and the terminal may include more or fewer components than shown, or combine some components, or have different component arrangements. In the embodiments of the present invention, the terminal includes, but is not limited to, a mobile phone, a tablet computer, a notebook computer, a handheld computer, an in-vehicle terminal, a wearable device, a pedometer, and the like.

The processor 710 is configured to:
in a case that there are L first transmission configuration indication TCI codepoints in TCI codepoints activated by a medium access control MAC control element CE, determine, according to downlink control information DCI detected by the radio frequency unit 701, a QCL relationship of M times of physical downlink shared channel PDSCH transmission scheduled by the DCI, where
both L and M are positive integers; each first TCI codepoint indicates P TCI states, P is an integer greater than 1, and the QCL relationship is QCL-typeD.

The DCI is any one of the following:
first DCI, where the first DCI does not include a TCI field; and
second DCI, where a TCI field in the second DCI indicates P TCI states.

When the DCI is the first DCI or the second DCI, the processor 710 is further configured to:
determine that first PDSCH transmission has a QCL relationship with a reference signal RS of one of TCI states indicated by a second TCI codepoint, where
the first PDSCH transmission is any PDSCH transmission in the M times of PDSCH transmission; and the second TCI codepoint is a TCI codepoint with a smallest index among the L first TCI codepoints.

Optionally, when the DCI is the second DCI, the processor 710 is further configured to perform at least one of the following:
determine that second PDSCH transmission has a QCL relationship with an RS of one of TCI states indicated by a second TCI codepoint; or
determine that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Optionally, when the DCI is the third DCI, the processor 710 is further configured to perform any one of the following:
in a case that the TCI state indicated by the TCI field is the same as one of TCI states in a second TCI codepoint, determine that second PDSCH transmission has a QCL relationship with an RS of the TCI state indicated by the TCI field; or
determine that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the processor 710 is further configured to perform any one of the following:
determine that third PDSCH transmission has a QCL relationship with the RS of the TCI state indicated by the TCI field; or
determine that third PDSCH transmission has a QCL relationship with the second PDSCH transmission, where
the third PDSCH transmission is any PDSCH transmission in last K times of PDSCH transmission in the M times of PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

Optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

Optionally, in a case that M is greater than 1, first TCI states are:
determined according to a cyclic mapping mode; and
determined according to a sequential mapping mode, where
the first TCI states include: M TCI states respectively corresponding to the M times of PDSCH transmission, or first N TCI states in the M TCI states.

Optionally, in a case that the first TCI states are determined according to the cyclic mapping mode, the first TCI states satisfy any one of the following:
an i-th TCI state of every P TCI states in the first TCI states has a mapping relationship with an i-th TCI state in P TCI states indicated by a target object; or
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

Optionally, in a case that the first TCI states are determined according to the sequential mapping mode, the first TCI states satisfy any one of the following:
a (2i-1)-th TCI state to a (2i)-th TCI state of every 2P TCI states in the first TCI states have a mapping relationship with an i-th TCI state in P TCI states indicated by a target object; or
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.

Optionally, the cyclic mapping mode or the sequential mapping mode is indicated by received indication information.

It should be noted that, the terminal 700 in the foregoing embodiment can implement the processes in the method embodiments of the embodiments of the present invention, to achieve the same beneficial effects. To avoid repetition, details are not described herein again.

It should be understood that, in the embodiments of the present invention, the radio frequency unit 701 may be configured to receive and transmit information or receive and transmit a signal during a call. Specifically, after downlink data from a base station is received, the downlink data is sent to the processor 710 for processing. In addition, uplink data is sent to the base station. Generally, the radio frequency unit 701 includes, but is not limited to, an antenna, at least one amplifier, a transceiver, a coupler, a low noise amplifier, a duplexer, and the like. In addition, the radio frequency unit 701 may further communicate with another device through a wireless communications system and network.

The terminal may provide, by using the network module 702, wireless broadband Internet access for a user, for example, help the user to receive or send an email, browse a web page, and access stream media.

The audio output unit 703 may convert audio data received by the radio frequency unit 701 or the network module 702 or stored in the memory 709 into audio signals and output the audio signals as sounds. In addition, the audio output unit 703 may further provide audio output related to specific functions implemented by the terminal 700 (for example, a call signal receiving sound and a message receiving sound). The audio output unit 703 includes a speaker, a buzzer, a receiver, and the like.

The input unit 704 is configured to receive an audio or video signal. The input unit 704 may include a graphics processing unit (Graphics Processing Unit, GPU) 7041 and a microphone 7042. The graphics processing unit 7041 performs processing on image data of a static picture or a video that is obtained by an image capturing device (for example, a camera) in a video acquisition mode or an image acquisition mode. The processed image frame can be displayed on the display unit 706. An image frame that has been processed by the graphics processing unit 7041 may be stored in the memory 709 (or another storage medium) or sent by using the radio frequency unit 701 or the network module 702. The microphone 7042 can receive sounds and can process such sounds as audio data. The processed audio data can be converted a phone call mode into an output in a format that can sent by the radio frequency unit 701 to a mobile communications base station.

The terminal 700 further includes at least one sensor 705 such as an optical sensor, a motion sensor, or another sensor. Specifically, the optical sensor includes an ambient light sensor and a proximity sensor. The ambient light sensor may adjust luminance of the display panel 7061 according to brightness of the ambient light. The proximity sensor may switch off the display panel 7061 and/or backlight when the terminal 700 is moved to the ear. As one type of motion sensor, an accelerometer sensor can detect magnitudes of accelerations in various directions (generally, on three axes), may detect a magnitude and a direction of the gravity when static, and may be performed by recognizing the attitude of the terminal (for example, switching between landscape orientation and portrait orientation, a related game, and magnetometer attitude calibration), a function related to vibration recognition (such as a pedometer and a knock), and the like. The sensor 705 may further include a fingerprint sensor, a pressure sensor, an iris sensor, a molecular sensor, a gyroscope, a barometer, a hygrometer, a thermometer, an infrared sensor, and the like, which are not described herein in detail.

The display unit 706 is configured to display information inputted by the user or information provided for the user. The display unit 706 may include a display panel 7061. The display panel 7061 may be configured by using a liquid crystal display (LCD), an organic light-emitting diode (OLED), or the like.

The user input unit 707 may be configured to receive input digit or character information, and generate a keyboard signal input related to the user setting and function control of the terminal. Specifically, the user input unit 707 includes a touch panel 7071 and another input device 7072. The touch panel 7071, also referred to as a touchscreen, may collect a touch operation of a user on or near the touch panel (such as an operation of a user on or near the touch panel 7071 by using any suitable object or attachment, such as a finger or a stylus). The touch panel 7071 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and transmits the touch point coordinates to the processor 710. Moreover, the touch controller may receive and execute a command transmitted from the processor 710. In addition, the touch panel 7071 may be implemented by using various types, such as a resistive type, a capacitive type, an infrared type, and a surface acoustic wave type. In addition to the touch panel 7071, the user input unit 707 may further include the another input device 7072. Specifically, the another input device 7072 may include, but is not limited to, a physical keyboard, a functional key (such as a volume control key or a switch key), a track ball, a mouse, and a joystick, which are not repeated herein.

Further, the touch panel 7071 may cover the display panel 7061. After detecting a touch operation on or near the touch panel, the touch panel 7071 transfers the touch operation to the processor 710, to determine a type of a touch event. Then, the processor 710 provides a corresponding visual output on the display panel 7061 according to the type of the touch event. In FIG. 7, the touch panel 7071 and the display panel 7061 implement, as two independent parts, input and output functions of the terminal. However, in some embodiments, the touch panel 7071 and the display panel 7061 may be integrated to implement the input and output functions of the terminal. The details are not limited herein.

The interface unit 708 is an interface for connecting an external apparatus and the terminal 700. For example, the external apparatus may include a wired or wireless headset port, an external power supply (or battery charger) port, a wired or wireless data port, a memory card port, a port for connecting an apparatus with a recognition module, an audio input/output (I/O) port, a video I/O port, a headphone port, and the like. The interface unit 708 may be configured to receive input (for example, data information or power) from an external apparatus and transmit the received input to one or more elements in the terminal 700 or may be configured to transmit data between the terminal 700 and the external apparatus.

The memory 709 may be configured to store a software program and various data. The memory 709 may mainly include a program storage area and a data storage area. The program storage area may store an operating system, an application program required by at least one function (for example, a sound playback function and an image display function), and the like. The data storage area may store data (for example, audio data and a phone book) created according to use of the mobile phone. In addition, the memory 709 may include a high speed random access memory, and may further include a non-volatile memory, such as at least one magnetic disk storage device, a flash memory or other non-volatile solid state storage devices.

The processor 710 is a control center of the terminal, and connects to various parts of the terminal by using various interfaces and lines. By running or executing the software program and/or module stored in the memory 709, and invoking data stored in the memory 709, the processor performs various functions and data processing of the terminal, thereby performing overall monitoring on the terminal. The processor 710 may include one or more processing units. Preferably, the processor 710 may integrate an application processor and a modem processor. The application processor mainly processes an operating system, a user interface, an application program, and the like. The modem processor mainly processes wireless communication. It may be understood that the foregoing modem processor may either not be integrated into the processor 710.

The terminal 700 may further include the power supply 711 (such as a battery) for supplying power to the components. Preferably, the power supply 711 may be logically connected to the processor 710 by using a power management system, thereby implementing functions such as charging, discharging, and power consumption management by using the power management system.

In addition, the terminal 700 includes some functional module that are not shown, which are not described herein in detail.

Preferably, the embodiments of the present invention further provide a terminal, including a processor 710, a memory 709, and a computer program stored in the memory 709 and executable on the processor 710, where the computer program, when executed by the processor 710, implements the processes of the embodiments of the QCL determining method, and can achieve the same technical effects. To avoid repetition, details are not described herein again.

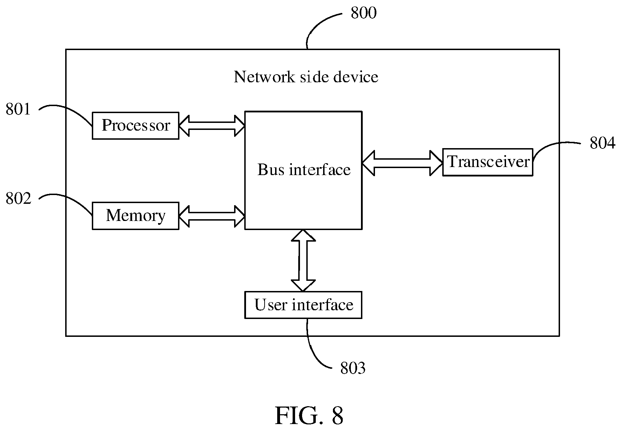

Referring to FIG. 8, FIG. 8 is a structural diagram 2 of a network side device according to an embodiment of the present invention. As shown in FIG. 8, a network side device 800 includes: a processor 801, a memory 802, a user interface 803, a transceiver 804, and a bus interface.

In this embodiment of the present invention, the network side device 800 further includes: a computer program stored in the memory 802 and executable by the processor 801, where the computer program, when executed by the processor 801, implements the following step:
in a case that there are L first TCI codepoints in TCI codepoints activated by a MAC CE, determining, according to DCI sent by the transceiver 804, a QCL relationship of M times of PDSCH transmission scheduled by the DCI, where
both L and M are positive integers; each first TCI codepoint indicates P TCI states, P is an integer greater than 1, and the QCL relationship is QCL-typeD.

The DCI is any one of the following:
first DCI, where the first DCI does not include a TCI field; and
second DCI, where a TCI field in the second DCI indicates P TCI states.

When the DCI is the first DCI or the second DCI, the computer program, when executed by the processor 801, is further configured to:
determine that first PDSCH transmission has a QCL relationship with a reference signal RS of one of TCI states indicated by a second TCI codepoint, where
the first PDSCH transmission is any PDSCH transmission in the M times of PDSCH transmission; and the second TCI codepoint is a TCI codepoint with a smallest index among the L first TCI codepoints.

Optionally, when the DCI is the second DCI, the computer program, when executed by the processor 801, is further configured to perform at least one of the following:
determine that second PDSCH transmission has a QCL relationship with an RS of one of TCI states indicated by a second TCI codepoint; or
determine that third PDSCH transmission has a QCL relationship with an RS of one of the TCI states indicated by the TCI field, where
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

Optionally, when the DCI is the third DCI, the computer program, when executed by the processor 801, is further configured to perform any of the following:
in a case that the TCI state indicated by the TCI field is the same as one of TCI states in a second TCI codepoint, determine that second PDSCH transmission has a QCL relationship with an RS of the TCI state indicated by the TCI field; or
determine that second PDSCH transmission has a QCL relationship with an RS of one of TCI states indicated by a second TCI codepoint, where
the second PDSCH transmission is any PDSCH transmission in first N times of PDSCH transmission in the M times of PDSCH transmission; and the second TCI codepoint is a TCI codepoint with a smallest index among the L first TCI codepoints.

Optionally, the computer program, when executed by the processor 801, is further configured to perform any of the following:
determine that third PDSCH transmission has a QCL relationship with the RS of the TCI state indicated by the TCI field; or
determine that third PDSCH transmission has a QCL relationship with the second PDSCH transmission, where
the third PDSCH transmission is any PDSCH transmission in last K times of PDSCH transmission in the M times of PDSCH transmission.

Optionally, a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

Optionally, among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a CORESET where the DCI is located.

Optionally, in a case that M is greater than 1, first TCI states are:
determined according to a cyclic mapping mode; and
determined according to a sequential mapping mode, where
the first TCI states include: M TCI states respectively corresponding to the M times of PDSCH transmission, or first N TCI states in the M TCI states.

Optionally, in a case that the first TCI states are determined according to the cyclic mapping mode, the first TCI states satisfy any one of the following:
an i-th TCI state of every P TCI states in the first TCI states has a mapping relationship with an i-th TCI state in P TCI states indicated by a target object; or
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, where
the target object is the second TCI codepoint or the TCI field; and i is a positive integer less than or equal to P.

Optionally, in a case that the first TCI states are determined according to the sequential mapping mode, the first TCI states satisfy any one of the following:
a (2i-1)-th TCI state to a (2i)-th TCI state of every 2P TCI states in the first TCI states have a mapping relationship with an i-th TCI state in P TCI states indicated by a target object; or
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, where
the target object is the second TCI codepoint or the TCI field; and i is a positive integer less than or equal to P.

In FIG. 8, a bus architecture may include any quantity of interconnected buses and bridges, and specifically connects together circuits that are of one or more processors represented by the processor 801 and of a memory represented by the memory 802. The bus architecture may further connect various other circuits of a peripheral, a voltage regulator, a power management circuit, and the like. This is well known in the art, and therefore, no further description is provided in this specification. The bus interface provides an interface. The transceiver 804 may be a plurality of components, including a transmitter and a receiver, and providing units for communicating with various other apparatuses on a transmission medium. For different user equipment, the user interface 803 may be an interface capable of externally or internally connecting a required device, the connected device includes, but not limited to, a keypad, a display, a speaker, a microphone, and a joystick.

The processor 801 is responsible for the management of the bus architecture and normal processing, and the memory 802 may store data used when the processor 2601 performs an operation.

The network side device 800 can implement the processes that can be implemented by the network side device in the foregoing method embodiments. To avoid repetition, details are not described herein again.

The embodiments of the present invention further provide a computer-readable storage medium, storing a computer program, where the computer program, when executed by a processor, implements the processes in the embodiments of the QCL determining method performed by the terminal or the processes in the embodiments of the QCL determining method performed by the network side device, and can achieve the same technical effects. To avoid repetition, details are not described herein again. The computer-readable storage medium may include a flash drive, a read-only memory (Read-Only Memory, ROM), a random access memory (Random Access Memory, RAM), a magnetic disk, or an optical disc.

It should be noted that, the term " include", "comprise" or any other variation thereof herein is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

Thes scope of protection of the invention is limited by the appended claims.

## Claims

1. A quasi co-location, QCL, determining method, performed by a terminal, the method comprising:
in a case that there are L first transmission configuration indication, TCI, codepoints in TCI codepoints activated by a medium access control, MAC, control element, CE, determining (301), according to detected downlink control information, DCI, a quasi co-located, QCL, relationship of M times of physical downlink shared channel, PDSCH, transmission scheduled by the DCI, wherein
both L and M are positive integers; each first TCI codepoint indicates P TCI states, and P is an integer greater than 1;
wherein the DCI is any one of following:
first DCI, wherein the first DCI does not include a TCI field; and
second DCI, wherein a TCI field in the second DCI indicates P TCI states; and
the determining (301) a QCL relationship of M times of PDSCH transmission scheduled by the DCI comprises:
determining that first PDSCH transmission has a QCL relationship with a reference signal, RS, of one of TCI states indicated by a second TCI codepoint, wherein
the first PDSCH transmission is any PDSCH transmission in the M times of PDSCH transmission; and the second TCI codepoint is a TCI codepoint with a smallest index among the L first TCI codepoints;
wherein the QCL relationship is QCL-typeD.

2. The method according to claim 1, wherein in a case that the DCI is the second DCI, the determining (301) a QCL relationship of M times of PDSCH transmission scheduled by the DCI further comprises at least one of following:
determining that second PDSCH transmission has a QCL relationship with a reference signal, RS, of one of TCI states indicated by a second TCI codepoint; and
determining that third PDSCH transmission has a QCL relationship with an RS of one of the TCI states indicated by the TCI field, wherein
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

3. The method according to claim 1 or 2, wherein a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

4. The method according to claim 1 or 2, wherein among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a control resource set, CORESET, where the DCI is located.

5. The method according to claim 1 or 2, wherein in a case that M is greater than 1, first TCI states are
determined according to a cyclic mapping mode; and
determined according to a sequential mapping mode, wherein
the first TCI states comprise: M TCI states respectively corresponding to the M times of PDSCH transmission, or first N TCI states in the M TCI states.

6. The method according to claim 5, wherein in a case that the first TCI states are determined according to the cyclic mapping mode, the first TCI states satisfy any one of following:
an i-th TCI state of every P TCI states in the first TCI states has a mapping relationship with an i-th TCI state in P TCI states indicated by a target object; and
an i-th TCI state of every P TCI states in first N TCI states in the first TCI states has a mapping relationship with an i-th TCI state in P TCI states indicated by a target object, and an i-th TCI state of every P TCI states in last K TCI states in the first TCI states has a mapping relationship with the i-th TCI state in the P TCI states indicated by the target object, wherein
the target object is the second TCI codepoint or the TCI field; and i is a positive integer less than or equal to P.

7. The method according to claim 5, wherein in a case that the first TCI states are determined according to the sequential mapping mode, the first TCI states satisfy any one of following:
a (2i-1)-th TCI state to a (2i)-th TCI state of every 2P TCI states in the first TCI states have a mapping relationship with an i-th TCI state in P TCI states indicated by a target object; and
a (2i-1)-th TCI state to a (2i)-th TCI state of every 2P TCI states in first N TCI states in the first TCI states have a mapping relationship with an i-th TCI state in P TCI states indicated by a target object, and a (2i-1)-th TCI state to a (2i)-th TCI state of every 2P TCI states in last K TCI states in the first TCI states have a mapping relationship with the i-th TCI state in the P TCI states indicated by the target object, wherein
the target object is the second TCI codepoint or the TCI field; and i is a positive integer less than or equal to P.

8. A quasi co-location, QCL, determining method, performed by a network side device, the method comprising:
in a case that there are L first transmission configuration indication, TCI, codepoints in TCI codepoints activated by a medium access control, MAC, control element, CE, determining (401), according to sent downlink control information, DCI, a quasi co-located, QCL, relationship of M times of physical downlink shared channel, PDSCH, transmission scheduled by the DCI, wherein
both L and M are positive integers; each first TCI codepoint indicates P TCI states, and P is an integer greater than 1;
wherein the DCI is any one of following:
first DCI, wherein the first DCI does not include a TCI field; and
second DCI, wherein a TCI field in the second DCI indicates P TCI states; and
the determining (401), a QCL relationship of M times of PDSCH transmission scheduled by the DCI comprises:
determining that first PDSCH transmission has a QCL relationship with a reference signal RS of one of TCI states indicated by a second TCI codepoint, wherein
the first PDSCH transmission is any PDSCH transmission in the M times of PDSCH transmission; and the second TCI codepoint is a TCI codepoint with a smallest index among the L first TCI codepoints;
wherein the QCL relationship is QCL-typeD.

9. A terminal (500), comprising:
a first determining module (501), configured to: in a case that there are L first transmission configuration indication, TCI, codepoints in TCI codepoints activated by a medium access control, MAC, control element, CE, determine, according to detected downlink control information, DCI, a quasi co-located, QCL, relationship of M times of physical downlink shared channel, PDSCH, transmission scheduled by the DCI, wherein
both L and M are positive integers; each first TCI codepoint indicates P TCI states, and P is an integer greater than 1;
wherein the DCI is any one of following:
first DCI, wherein the first DCI does not include a TCI field; and
second DCI, wherein a TCI field in the second DCI indicates P TCI states; and
the first determining module (501) is specifically configured to: determine that first PDSCH transmission has a QCL relationship with a reference signal, RS, of one of TCI states indicated by a second TCI codepoint, wherein
the first PDSCH transmission is any PDSCH transmission in the M times of PDSCH transmission; and the second TCI codepoint is a TCI codepoint with a smallest index among the L first TCI codepoints;
wherein the QCL relationship is QCL-typeD.

10. The terminal (500) according to claim 9, wherein in a case that the DCI is the second DCI, the first determining module (501) is further configured to perform at least one of following:
determining that second PDSCH transmission has a QCL relationship with a reference signal, RS, of one of TCI states indicated by a second TCI codepoint; and
determining that third PDSCH transmission has a QCL relationship with an RS of one of the TCI states indicated by the TCI field, wherein
the second PDSCH transmission is any PDSCH transmission in first N times of PDSCH transmission in the M times of PDSCH transmission; the third PDSCH transmission is any PDSCH transmission in last K times of PDSCH transmission in the M times of PDSCH transmission; and the second TCI codepoint is a TCI codepoint with a smallest index among the L first TCI codepoints.

11. The terminal (500) according to claim 9 or 10, wherein a time offset of the first N times of PDSCH transmission in the M times of PDSCH transmission is less than a threshold, a time offset of the last K times of PDSCH transmission in the M times of PDSCH transmission is greater than or equal to the threshold, N is a natural number less than or equal to M, and K is a natural number less than or equal to M.

12. The terminal (500) according to claim 9 or 10, wherein among the P TCI states indicated by the second TCI codepoint, the one of TCI states indicated by the second TCI codepoint is:
a TCI state agreed in a protocol; or
a TCI state configured by a network side device; or
a TCI state the same as a TCI state corresponding to a control resource set, CORESET, where the DCI is located.

13. The terminal (500) according to claim 9 or 10, wherein in a case that M is greater than 1, first TCI states are:
determined according to a cyclic mapping mode; and
determined according to a sequential mapping mode, wherein
the first TCI states comprise: M TCI states respectively corresponding to the M times of PDSCH transmission, or first N TCI states in the M TCI states.

14. A network side device (600), comprising:
a second determining module (601), configured to: in a case that there are L first transmission configuration indication, TCI, codepoints in TCI codepoints activated by a medium access control, MAC, control element, CE, determine, according to sent downlink control information, DCI, a quasi co-located, QCL, relationship of M times of physical downlink shared channel, PDSCH, transmission scheduled by the DCI, wherein
both L and M are positive integers; each first TCI codepoint indicates P TCI states, and P is an integer greater than 1;
wherein the DCI is any one of following:
first DCI, wherein the first DCI does not include a TCI field; and
second DCI, wherein a TCI field in the second DCI indicates P TCI states; and
the second determining module (601) is specifically configured to: determine that first PDSCH transmission has a QCL relationship with a reference signal RS of one of TCI states indicated by a second TCI codepoint, wherein
the first PDSCH transmission is any PDSCH transmission in the M times of PDSCH transmission; and the second TCI codepoint is a TCI codepoint with a smallest index among the L first TCI codepoints;
wherein the QCL relationship is QCL-typeD.

15. A computer-readable storage medium, storing a computer program, wherein the computer program, when executed by a processor (710, 801), implements steps of the quasi co-location, QCL,
determining method according to any one of claims 1 to 7 or steps of the QCL determining method according to claim 8.

## Patentansprüche

1. Verfahren zur Bestimmung einer Quasi-Ko-Lokalisierung, QCL, das von einem Endgerät durchgeführt wird, das Verfahren umfassend:
in einem Fall, dass L erste Übertragungskonfigurationsanzeige, TCI-, Codepunkte in TCI-Codepunkte vorhanden sind, die durch ein Medium Access Control, MAC-, Steuerelement, CE, aktiviert werden, Bestimmen (301) nach erkannten Downlink-Steuerinformationen, DCI, einer Quasi-Ko-Lokalisierung, QCL, Beziehung von M Maligen einer Physical-Downlink-Shared-Channel, PDSCH, Übertragung, die durch die DCI geplant werden, wobei
sowohl L als auch M positive ganze Zahlen sind; jeder erste TCI-Codepunkt P TCI-Zustände anzeigt, und P eine ganze Zahl größer als 1 ist;
wobei die DCI eine der folgenden ist:
erste DCI, wobei die erste DCI kein TCI-Feld enthält; und
zweite DCI, wobei ein TCI-Feld in der zweiten DCI P TCI-Zustände anzeigt; und
das Bestimmen (301) einer QCL-Beziehung von M Maligen einer PDSCH-Übertragung, die durch die DCI geplant werden, umfasst:
Bestimmen, dass eine erste PDSCH Übertragung eine QCL-Beziehung mit einem Referenzsignal, RS, eines der TCI-Zustände, die durch einen zweiten TCI-Codepunkt angezeigt werden, aufweist, wobei
die erste PDSCH-Übertragung eine beliebige PDSCH-Übertragung in den M Maligen einer PDSCH-Übertragung ist; und der zweite TCI-Codepunkt ein TCI-Codepunkt mit dem kleinsten Index unter den L ersten TCI-Codepunkten ist;
wobei die QCL-Beziehung QCL-typeD ist.

2. Verfahren nach Anspruch 1, wobei in einem Fall, dass die DCI die zweite DCI ist, das Bestimmen (301) einer QCL-Beziehung von M Maligen der PDSCH Übertragung, die durch die DCI geplant werden, ferner mindestens eines der folgenden umfasst:
Bestimmen, dass eine zweite PDSCH Übertragung eine QCL-Beziehung mit einem Referenzsignal, RS, eines der TCI-Zustände, die durch einen zweiten TCI-Codepunkt angezeigt werden, aufweist; und
Bestimmen, dass eine dritte PDSCH Übertragung eine QCL-Beziehung mit einem RS eines der TCI-Zustände, die durch das TCI-Feld angezeigt werden, aufweist, wobei
die zweite PDSCH Übertragung eine beliebige PDSCH Übertragung in den ersten N Maligen einer PDSCH Übertragung in den M Maligen der PDSCH Übertragung ist; die dritte PDSCH Übertragung eine beliebige PDSCH Übertragung in den letzten K Maligen einer PDSCH Übertragung in den M Maligen der PDSCH-Übertragung ist; und der zweite TCI-Codepunkt ein TCI-Codepunkt mit dem kleinsten Index unter den L ersten TCI-Codepunkten ist.

3. Verfahren nach Anspruch 1 oder 2, wobei ein Zeitoffset der ersten N Maligen einer PDSCH-Übertragung in den M Maligen der PDSCH-Übertragung kleiner als ein Schwellenwert ist, ein Zeitoffset der letzten K Maligen der PDSCH-Übertragung in den M Maligen der PDSCH-Übertragung größer oder gleich dem Schwellenwert ist, N eine natürliche Zahl kleiner oder gleich M ist und K eine natürliche Zahl kleiner oder gleich M ist.

4. Verfahren nach Anspruch 1 oder 2, wobei unter den P TCI-Zuständen, die durch den zweiten TCI-Codepunkt angezeigt werden, einer der TCI-Zustände, die durch den zweiten TCI-Codepunkt angezeigt werden, ist:
ein TCI-Zustand, der in einem Protokoll akzeptiert wird; oder
ein TCI-Zustand, der durch eine netzseitige Vorrichtung konfiguriert wird; oder
ein TCI-Zustand, der dem TCI-Zustand gleich ist, der einem Kontrollressourcensatz, CORESET, entspricht, in dem sich die DCI befindet.

5. Verfahren nach Anspruch 1 oder 2, wobei in einem Fall, dass M größer als 1 ist, erste TCI-Zustände:
nach einem zyklischen Zuordnungsmodus bestimmt werden; und
nach einem sequenziellen Zuordnungsmodus bestimmt werden, wobei die ersten TCI-Zustände umfassen: M TCI-Zustände, die jeweils den M Maligen der PDSCH-Übertragung entsprechen, oder erste N TCI-Zustände in den M TCI-Zuständen.

6. Verfahren nach Anspruch 5, wobei in einem Fall, dass die ersten TCI-Zustände nach dem zyklischen Zuordnungsmodus bestimmt werden, die ersten TCI-Zustände eine der folgenden Bedingungen erfüllen:
ein i-ter TCI-Zustand jeder P TCI-Zustände in den ersten TCI-Zuständen eine Zuordnungsbeziehung mit einem i-ten TCI-Zustand in den P TCI-Zuständen, die durch ein Zielobjekt angezeigt werden, aufweist; und
ein i-ter TCI-Zustand jeder P TCI-Zustände in ersten N TCI-Zuständen in den ersten TCI-Zuständen eine Zuordnungsbeziehung mit einem i-ten TCI-Zustand in P TCI-Zustände, die durch ein Zielobjekt angezeigt werden, aufweist, und ein i-ter TCI-Zustand jeder P TCI-Zustände in den letzten K TCI-Zuständen in den ersten TCI-Zuständen eine Zuordnungsbeziehung mit dem i-ten TCI-Zustand in den P TCI-Zuständen, die durch das Zielobjekt angezeigt werden, aufweist, wobei
das Zielobjekt der zweite TCI-Codepunkt oder das TCI-Feld ist; und i eine positive ganze Zahl ist, die kleiner oder gleich P ist.

7. Verfahren nach Anspruch 5, wobei in einem Fall, dass die ersten TCI-Zustände nach dem sequenziellen Zuordnungsmodus bestimmt werden, die ersten TCI-Zustände eine der folgenden Bedingungen erfüllen:
ein (2i-1) ter TCI-Zustand bis ein (2i)-ter TCI-Zustand jeder 2P TCI-Zustände in den ersten TCI-Zuständen eine Zuordnungsbeziehung mit einem i-ten TCI-Zustand in P TCI-Zuständen, die durch ein Zielobjekt angezeigt werden, aufweist; und
ein (2i-1)-ter TCI Zustand bis ein (2i)-ter TCI-Zustand jeder 2P TCI-Zustände in ersten N TCI Zustände in den ersten N TCI-Zuständen eine Zuordnungsbeziehung mit einem i-ten TCI-Zustand in P TCI-Zustände, die durch ein Zielobjekt angezeigt werden, aufweist, und ein (2i-1) ter TCI Zustand bis ein (2i) ter TCI-Zustand jeder 2P TCI Zustände in den letzten K TCI Zuständen in den ersten TCI-Zuständen eine Zuordnungsbeziehung mit dem i-ten TCI Zustand in den P TCI Zuständen, die durch das Zielobjekt angezeigt werden, aufweist, wobei
das Zielobjekt der zweite TCI-Codepunkt oder das TCI-Feld ist; und i eine positive ganze Zahl ist, die kleiner oder gleich P ist.

8. Verfahren zur Bestimmung einer Quasi-Ko-Lokalisierung, QCL, das von einer netzseitigen Vorrichtung durchgeführt wird, das Verfahren umfassend:
in einem Fall, dass L erste Übertragungskonfigurationsanzeige-, TCI-, Codepunkte in TCI-Codepunkte, die durch ein Medium Access Control-, MAC-, Steuerelement, CE, aktiviert werden, vorhanden sind, Bestimmen (401) nach gesendeten Downlink-Steuerinformationen, DCI, einer Quasi-Ko-Lokalisierung, QCL, Beziehung von M Maligen einer Physical-Downlink-Shared-Channel, PDSCH, Übertragung, die durch die DCI geplant werden, wobei
sowohl L als auch M positive ganze Zahlen sind; jeder erste TCI-Codepunkt P TCI-Zustände anzeigt, wobei P eine ganze Zahl größer als 1 ist;
wobei die DCI eine der folgenden ist:
erste DCI, wobei die erste DCI kein TCI-Feld enthält; und
zweite DCI, wobei ein TCI-Feld in der zweiten DCI P TCI-Zustände anzeigt; und
das Bestimmen (401) einer QCL-Beziehung für M Maligen einer PDSCH-Übertragung, die durch die DCI geplant werden, umfasst:
Bestimmen, dass eine erste PDSCH-Übertragung eine QCL-Beziehung mit einem Referenzsignal RS eines der TCI-Zustände, die durch einen zweiten TCI-Codepunkt angezeigt werden, aufweist, wobei
die erste PDSCH-Übertragung eine beliebige PDSCH-Übertragung in den M Maligen einer PDSCH-Übertragung ist; und der zweite TCI-Codepunkt ein TCI-Codepunkt mit dem kleinsten Index unter den L ersten TCI-Codepunkten ist;
wobei die QCL-Beziehung QCL-typeD ist.

9. Endgerät (500), umfassend
ein erstes Bestimmungsmodul (501), das dazu konfiguriert um: in einem Fall, dass L erste Übertragungskonfigurationsanzeige-, TCI-, Codepunkte in TCI-Codepunkten, die durch ein Medium Access Control-, MAC-, Steuerelement, CE, aktiviert werden, vorhanden sind, nach den erkannten Downlink-Steuerinformationen, DCI, eine Quasi-Ko-Lokalisierung, QCL, Beziehung von M Maligen einer Physical-Downlink-Shared-Channel, PDSCH, Übertragung, die durch die DCI geplant werden, zu bestimmen, wobei
sowohl L als auch M positive ganze Zahlen sind; jeder erste TCI-Codepunkt P TCI-Zustände anzeigt, wobei P eine ganze Zahl größer als 1 ist;
wobei die DCI eine der folgenden ist:
erste DCI, wobei die erste DCI kein TCI-Feld enthält; und
zweite DCI, wobei ein TCI-Feld in der zweiten DCI P TCI-Zustände anzeigt; und
das erste Bestimmungsmodul (501) spezifisch dazu konfiguriert ist, um: zu bestimmen, dass eine erste PDSCH-Übertragung eine QCL-Beziehung mit einem Referenzsignal, RS, eines der TCI-Zustände, die durch einen zweiten TCI-Codepunkt angezeigt werden, aufweist, wobei
die erste PDSCH-Übertragung eine beliebige PDSCH-Übertragung in den M Maligen einer PDSCH-Übertragung ist; und der zweite TCI-Codepunkt ein TCI-Codepunkt mit dem kleinsten Index unter den L ersten TCI-Codepunkten ist;
wobei die QCL-Beziehung QCL-typeD ist.

10. Endgerät (500) nach Anspruch 9, wobei in einem Fall, dass die DCI die zweite DCI ist, das erste Bestimmungsmodul (501) ferner dazu konfiguriert ist, mindestens eines der folgenden auszuführen:
Bestimmen, dass eine zweite PDSCH-Übertragung eine QCL-Beziehung mit einem Referenzsignal, RS, eines der TCI-Zustände, die durch einen zweiten TCI-Codepunkt angezeigt werden, aufweist; und
Bestimmen, dass eine dritte PDSCH-Übertragung eine QCL-Beziehung mit einem RS eines der TCI-Zustände, die durch das TCI-Feld angezeigt werden, aufweist, wobei
die zweite PDSCH-Übertragung eine beliebige PDSCH-Übertragung in den ersten N Maligen einer PDSCH-Übertragung in den M Maligen einer PDSCH-Übertragung ist; die dritte PDSCH-Übertragung eine beliebige PDSCH-Übertragung in den letzten K Maligen einer PDSCH-Übertragung in den M Maligen einer PDSCH-Übertragung ist; und der zweite TCI-Codepunkt ein TCI-Codepunkt mit dem kleinsten Index unter den L ersten TCI-Codepunkten ist.

11. Endgerät (500) nach Anspruch 9 oder 10, wobei ein Zeitoffset der ersten N Maligen einer PDSCH-Übertragung in den M Maligen einer PDSCH-Übertragung kleiner als ein Schwellenwert ist, ein Zeitoffset der letzten K Maligen einer PDSCH-Übertragung in den M Maligen einer PDSCH-Übertragung größer oder gleich dem Schwellenwert ist, N eine natürliche Zahl kleiner oder gleich M ist, und K eine natürliche Zahl kleiner oder gleich M ist.

12. Endgerät (500) nach Anspruch 9 oder 10, wobei unter den P TCI-Zuständen, die durch den zweiten TCI-Codepunkt angezeigt werden, einer der TCI-Zustände, die durch den zweiten TCI-Codepunkt angezeigt werden, ist:
ein TCI-Zustand, der in einem Protokoll akzeptiert wird; oder
ein TCI-Zustand, der durch eine netzseitige Vorrichtung konfiguriert wird; oder
ein TCI-Zustand, der einem TCI-Zustand gleich ist, der einem Kontrollressourcensatz, CORESET, entspricht, in dem sich die DCI befindet.

13. Endgerät (500) nach Anspruch 9 oder 10, wobei in einem Fall, dass M größer als 1 ist, erste TCI-Zustände
nach einem zyklischen Zuordnungsmodus bestimmt werden; und
nach einem sequenziellen Zuordnungsmodus bestimmt werden, wobei
die ersten TCI-Zustände umfassen: M TCI-Zustände, die jeweils den M Maligen einer PDSCH-Übertragung entsprechen, oder erste N TCI-Zustände in den M TCI-Zuständen.

14. Netzseitige Vorrichtung (600), umfassend
ein zweites Bestimmungsmodul (601), das dazu konfiguriert ist, um: in einem Fall, dass L erste Übertragungskonfigurationsanzeige-, TCI-, Codepunkte in TCI-Codepunkten, die durch ein Medium Access Control-, MAC-, Steuerelement, CE, aktiviert werden, vorhanden sind, nach gesendeten Downlink-Steuerinformationen, DCI, eine Quasi-Ko-Lokalisierung, QCL, Beziehung von M Maligen einer Physical-Downlink-Shared-Channel, PDSCH, Übertragung zu bestimmen, die durch die DCI geplant werden, wobei
sowohl L als auch M positive ganze Zahlen sind; jeder erste TCI-Codepunkt P TCI-Zustände anzeigt, wobei P eine ganze Zahl größer als 1 ist;
wobei die DCI eine der folgenden ist:
erste DCI, wobei die erste DCI kein TCI-Feld enthält; und
zweite DCI, wobei ein TCI-Feld in der zweiten DCI P TCI-Zustände anzeigt; und
das zweite Bestimmungsmodul (601) spezifisch dazu konfiguriert ist um: zu bestimmen, dass eine erste PDSCH-Übertragung eine QCL-Beziehung mit einem Referenzsignal RS eines der TCI-Zustände, die durch einen zweiten TCI-Codepunkt angezeigt werden, aufweist, wobei
die erste PDSCH-Übertragung eine beliebige PDSCH-Übertragung in den M Maligen einer PDSCH-Übertragung ist; und der zweite TCI-Codepunkt ein TCI-Codepunkt mit dem kleinsten Index unter den L ersten TCI-Codepunkten ist;
wobei die QCL-Beziehung QCL-typeD ist.

15. Computerlesbaren Speichermediums, das ein Computerprogramm speichert, wobei das Computerprogramm, wenn es von einem Prozessor (710, 801) ausgeführt wird, Schritte des Verfahrens zur Bestimmung einer Quasi-Ko-Lokalisierung, QCL, nach einem der Ansprüche 1 bis 7 oder Schritte des QCL-Bestimmungsverfahrens nach Anspruch 8 implementiert.

## Revendications

1. Un procédé de détermination de quasi-co-localisation, QCL, mis en œuvre par un terminal, le procédé comprenant :
dans le cas où il existe L premiers points de code d'indication de configuration de transmission, TCI, parmi les points de code TCI activés par un élément de contrôle, CE, de contrôle d'accès au support, MAC, déterminer (301), selon des informations de contrôle en liaison descendante, DCI, détectées, une relation de quasi-co-localisation, QCL, de M fois de transmission de canal partagé de liaison descendante physique, PDSCH, planifiées par les DCI, dans lequel
L et M sont tous deux des entiers positifs ; chaque premier point de code TCI indique P états TCI, et P est un entier supérieur à 1 ;
dans lequel les DCI sont l'un quelconque des éléments suivants :
premier DCI, dans lequel le premier DCI ne comprend pas de champ TCI ; et
second DCI, dans lequel un champ TCI dans le second DCI indique P états TCI ; et
la détermination (301) d'une relation QCL de M fois de transmission de PDSCH planifiées par les DCI comprend :
déterminer qu'une première transmission de PDSCH présente une relation QCL avec un signal de référence, RS, de l'un des états TCI indiqués par un second point de code TCI, dans lequel
la première transmission de PDSCH est toute transmission de PDSCH parmi les M transmissions de PDSCH ; et le second point de code TCI est un point de code TCI ayant l'indice le plus petit parmi les L premiers points de code TCI ;
dans lequel la relation QCL est du type QCL-typeD.

2. Le procédé selon la revendication 1, dans lequel dans le cas où le DCI est le second DCI, la détermination (301) d'une relation QCL de M fois de transmission de PDSCH planifiées par le DCI comprend en outre au moins un des éléments suivants :
déterminer qu'une seconde transmission de PDSCH présente une relation QCL avec un signal de référence, RS, de l'un des états TCI indiqués par un second point de code TCI ; et
déterminer qu'une troisième transmission de PDSCH présente une relation QCL avec un RS de l'un des états TCI indiqués par le champ TCI, dans lequel
la seconde transmission de PDSCH est toute transmission de PDSCH parmi les premières N fois de transmission de PDSCH parmi les M fois de transmissions de PDSCH ; la troisième transmission de PDSCH est toute transmission de PDSCH parmi les dernières fois K transmissions de PDSCH parmi les M fois de transmissions de PDSCH ; et le second point de code TCI est un point de code TCI ayant l'indice le plus petit parmi les L premiers points de code TCI.

3. Le procédé selon la revendication 1 ou 2, dans lequel un décalage temporel des premières N fois de transmission de PDSCH parmi les M fois de transmission de PDSCH est inférieur à un seuil, un décalage temporel des dernières K fois de transmission de PDSCH parmi les M fois de transmission de PDSCH est supérieur ou égal au seuil, N est un nombre naturel inférieur ou égal à M, et K est un nombre naturel inférieur ou égal à M.

4. Le procédé selon la revendication 1 ou 2, dans lequel parmi les P états TCI indiqués par le second point de code TCI, l'un des états TCI indiqués par le second point de code TCI est :
un état TCI convenu dans un protocole ; ou
un état TCI configuré par un dispositif côté réseau ; ou
un état TCI identique à un état TCI correspondant à un ensemble de ressources de contrôle, CORESET, dans lequel se trouve le DCI.

5. Le procédé selon la revendication 1 ou 2, dans lequel dans le cas où M est supérieur à 1, les premiers états TCI sont :
déterminés selon un mode de mappage cyclique ; et
déterminés selon un mode de mappage séquentiel, dans lequel
les premiers états TCI comprennent : M états TCI correspondant respectivement aux M fois de transmission de PDSCH, ou les premiers N états TCI parmi les M états TCI.

6. Le procédé selon la revendication 5, dans lequel dans le cas où les premiers états TCI sont déterminés selon le mode de mappage cyclique, les premiers états TCI satisfont à l'un quelconque des éléments suivants :
un i-ème état TCI de chaque groupe de P états TCI parmi les premiers états TCI a une relation de mappage avec un i-ème état TCI parmi les P états TCI indiqués par un objet cible ; et
un i-ème état TCI de chaque groupe de P états TCI parmi les premiers N états TCI dans les premiers états TCI a une relation de mappage avec un i-ème état TCI parmi les P états TCI indiqués par un objet cible, et un i-ème état TCI de chaque groupe de P états TCI parmi les derniers K états TCI dans les premiers états TCI a une relation de mappage avec l'i-ème état TCI parmi les P états TCI indiqués par l'objet cible, dans lequel
l'objet cible est le second point de code TCI ou le champ TCI ; et i est un entier positif inférieur ou égal à P.

7. Le procédé selon la revendication 5, dans lequel dans le cas où les premiers états TCI sont déterminés selon le mode de mappage séquentiel, les premiers états TCI satisfont à l'un quelconque des éléments suivants :
un état TCI de rang (2i-1) à un état TCI de rang (2i) de chaque groupe de 2P états TCI parmi les premiers états TCI a une relation de mappage avec un i-ème état TCI parmi les P états TCI indiqués par un objet cible ; et
un état TCI de rang (2i-1) à un état TCI de rang (2i) de chaque groupe de 2P états TCI parmi les premiers N états TCI dans les premiers états TCI a une relation de mappage avec un i-ème état TCI parmi les P états TCI indiqués par un objet cible, et un état TCI de rang (2i-1) à un état TCI de rang (2i) de chaque groupe de 2P états TCI parmi les derniers K états TCI dans les premiers états TCI a une relation de mappage avec l'i-ème état TCI parmi les P états TCI indiqués par l'objet cible, dans lequel
l'objet cible est le second point de code TCI ou le champ TCI ; et i est un entier positif inférieur ou égal à P.

8. Un procédé de détermination de quasi-co-localisation, QCL, mis en œuvre par un dispositif côté réseau, le procédé comprenant :
dans le cas où il existe L premiers points de code d'indication de configuration de transmission, TCI, parmi les points de code TCI activés par un élément de contrôle, CE, de contrôle d'accès au support, MAC, déterminer (401), selon des informations de contrôle en liaison descendante, DCI, envoyées, une relation de quasi-co-localisation, QCL, de M fois de transmission de canal partagé de liaison descendante physique, PDSCH, planifiées par les DCI, dans lequel
L et M sont tous deux des entiers positifs ; chaque premier point de code TCI indique P états TCI, et P est un entier supérieur à 1 ;
dans lequel les DCI sont l'un quelconque des éléments suivants :
premier DCI, dans lequel le premier DCI ne comprend pas de champ TCI ; et
second DCI, dans lequel un champ TCI dans le second DCI indique P états TCI ; et
la détermination (401) d'une relation QCL de M fois de transmission de PDSCH planifiées par les DCI comprend :
déterminer qu'une première transmission de PDSCH présente une relation QCL avec un signal de référence RS de l'un des états TCI indiqués par un second point de code TCI, dans lequel
la première transmission de PDSCH est toute transmission de PDSCH parmi les M fois de transmissions de PDSCH ; et le second point de code TCI est un point de code TCI ayant l'indice le plus petit parmi les L premiers points de code TCI ;
dans lequel la relation QCL est du type QCL-typeD.

9. Un terminal (500), comprenant
un premier module de détermination (501), configuré pour : dans le cas où il existe L premiers points de code d'indication de configuration de transmission, TCI, parmi les points de code TCI activés par un élément de contrôle, CE, de contrôle d'accès au support, MAC, déterminer, selon des informations de contrôle en liaison descendante, DCI, détectées, une relation de quasi-co-localisation, QCL, de M fois de transmission de canal partagé de liaison descendante physique, PDSCH, planifiées par les DCI, dans lequel
L et M sont tous deux des entiers positifs ; chaque premier point de code TCI indique P états TCI, et P est un entier supérieur à 1 ;
dans lequel les DCI sont l'un quelconque des éléments suivants :
premier DCI, dans lequel le premier DCI ne comprend pas de champ TCI ; et
second DCI, dans lequel un champ TCI dans le second DCI indique P états TCI ; et
le premier module de détermination (501) est spécifiquement configuré pour : déterminer qu'une première transmission de PDSCH présente une relation QCL avec un signal de référence, RS, de l'un des états TCI indiqués par un second point de code TCI, dans lequel
la première transmission de PDSCH est toute transmission de PDSCH parmi les M fois de transmission de PDSCH ; et le second point de code TCI est un point de code TCI ayant l'indice le plus petit parmi les L premiers points de code TCI ;
dans lequel la relation QCL est du type QCL-typeD.

10. Le terminal (500) selon la revendication 9, dans lequel dans le cas où le DCI est le second DCI, le premier module de détermination (501) est en outre configuré pour effectuer au moins un des éléments suivants :
déterminer qu'une seconde transmission de PDSCH présente une relation QCL avec un signal de référence, RS, de l'un des états TCI indiqués par un second point de code TCI ; et
déterminer qu'une troisième transmission de PDSCH présente une relation QCL avec un RS de l'un des états TCI indiqués par le champ TCI, dans lequel
la seconde transmission de PDSCH est toute transmission de PDSCH parmi les premières N fois de transmission de PDSCH parmi les M fois de transmission de PDSCH ; la troisième transmission de PDSCH est toute transmission de PDSCH parmi les dernières K fois de transmission de PDSCH parmi les M fois de transmission de PDSCH ; et le second point de code TCI est un point de code TCI ayant l'indice le plus petit parmi les L premiers points de code TCI.

11. Le terminal (500) selon la revendication 9 ou 10, dans lequel un décalage temporel des premières N fois de transmission de PDSCH parmi les M fois de transmission de PDSCH est inférieur à un seuil, un décalage temporel des dernières K fois de transmission de PDSCH parmi les M fois de transmission de PDSCH est supérieur ou égal au seuil, N est un nombre naturel inférieur ou égal à M, et K est un nombre naturel inférieur ou égal à M.

12. Le terminal (500) selon la revendication 9 ou 10, dans lequel parmi les P états TCI indiqués par le second point de code TCI, l'un des états TCI indiqués par le second point de code TCI est :
un état TCI convenu dans un protocole ; ou
un état TCI configuré par un dispositif côté réseau ; ou
un état TCI identique à un état TCI correspondant à un ensemble de ressources de contrôle, CORESET, dans lequel se trouve le DCI.

13. Le terminal (500) selon la revendication 9 ou 10, dans lequel dans le cas où M est supérieur à 1, les premiers états TCI sont :
déterminés selon un mode de mappage cyclique ; et
déterminés selon un mode de mappage séquentiel, dans lequel
les premiers états TCI comprennent : M états TCI correspondant respectivement aux M fois de transmission de PDSCH, ou les premiers N états TCI parmi les M états TCI.

14. Un dispositif côté réseau (600), comprenant
un second module de détermination (601), configuré pour : dans le cas où il existe L premiers points de code d'indication de configuration de transmission, TCI, parmi les points de code TCI activés par un élément de contrôle, CE, de contrôle d'accès au support, MAC, déterminer, selon des informations de contrôle en liaison descendante, DCI, envoyées, une relation de quasi-co-localisation, QCL, de M fois de transmission de canal partagé de liaison descendante physique, PDSCH, planifiées par les DCI, dans lequel
L et M sont tous deux des entiers positifs ; chaque premier point de code TCI indique P états TCI, et P est un entier supérieur à 1 ;
dans lequel les DCI sont l'un quelconque des éléments suivants :
premier DCI, dans lequel le premier DCI ne comprend pas de champ TCI ; et
second DCI, dans lequel un champ TCI dans le second DCI indique P états TCI ; et
le second module de détermination (601) est spécifiquement configuré pour : déterminer qu'une première transmission de PDSCH présente une relation QCL avec un signal de référence RS de l'un des états TCI indiqués par un second point de code TCI, dans lequel
la première transmission de PDSCH est toute transmission de PDSCH parmi les M fois de transmissions de PDSCH ; et le second point de code TCI est un point de code TCI ayant l'indice le plus petit parmi les L premiers points de code TCI ;
dans lequel la relation QCL est du type QCL-typeD.

15. Un support de stockage lisible par ordinateur, stockant un programme informatique, dans lequel le programme informatique, lorsqu'il est exécuté par un processeur (710, 801), met en œuvre les étapes du procédé de détermination de quasi-co-localisation, QCL, selon l'une quelconque des revendications 1 à 7 ou les étapes du procédé de détermination QCL selon la revendication 8.
